(19) Europäisches Patentamt / European Patent Office / Office européen des brevets

(11) **EP 3 508 639 B1**

(12) **EUROPEAN PATENT SPECIFICATION**

(45) Date of publication and mention
of the grant of the patent:
**23.10.2024 Bulletin 2024/43**

(21) Application number: **17846327.9**

(22) Date of filing: **25.08.2017**

(51) International Patent Classification (IPC):
***D04H 3/147*** *(2012.01)*     ***B01D 63/00*** *(2006.01)*
***D04H 3/011*** *(2012.01)*

(52) Cooperative Patent Classification (CPC):
**D04H 3/147; B01D 69/1071; D04H 3/011;**
**D04H 3/016; D04H 3/033;** B01D 2323/39

(86) International application number:
**PCT/JP2017/030507**

(87) International publication number:
**WO 2018/043322 (08.03.2018 Gazette 2018/10)**

(54) **SPUNBONDED NONWOVEN FABRIC AND PRODUCTION METHOD THEREFOR**

SPINNVLIESSTOFF UND HERSTELLUNGSVERFAHREN DAFÜR

NON-TISSÉ FILÉ-LIÉ, ET PROCÉDÉ DE FABRICATION DE CELUI-CI

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **02.09.2016 JP 2016171657**
**02.09.2016 JP 2016171658**

(43) Date of publication of application:
**10.07.2019 Bulletin 2019/28**

(73) Proprietor: **Toray Industries, Inc.**
**Tokyo 103-8666 (JP)**

(72) Inventors:
• **SHIMADA, Daiki**
**Otsu-shi**
**Shiga 520-8558 (JP)**
• **IKEJIRI, Yuki**
**Otsu-shi**
**Shiga 520-8558 (JP)**
• **NAKANO, Yohei**
**Otsu-shi**
**Shiga 520-8558 (JP)**

(74) Representative: **Mewburn Ellis LLP**
**Aurora Building**
**Counterslip**
**Bristol BS1 6BX (GB)**

(56) References cited:
| EP-A1- 2 174 703 | EP-A1- 2 818 229 |
| EP-A1- 3 051 014 | EP-A1- 3 395 426 |
| WO-A1-2013/125583 | JP-A- 2007 284 859 |
| JP-A- 2009 057 654 | JP-A- 2009 090 279 |
| US-A1- 2005 130 545 | |

**Description**

TECHNICAL FIELD

The present invention relates to a spunbonded nonwoven fabric having a smooth surface and being particularly excellent in membrane formability and a production method for the spunbonded nonwoven fabric.

BACKGROUND ART

In recent years, membrane technology is applied in many cases for water treatment. For example, microfiltration membranes and ultrafiltration membranes are used in water purification plants, and reverse osmosis membranes are used for saline water conversion. Reverse osmosis membranes and nanofiltration membranes are used for the treatment of water for manufacturing semiconductors, water for boilers, water for medical use, pure water for laboratories, and the like. For the treatment of sewage water and waste water, microfiltration membranes and ultrafiltration membranes are used to perform a membrane separation activated sludge method.

These separation membranes are roughly classified into flat membranes and hollow fiber membranes in terms of the membrane shape. A flat membrane, which is mainly formed of a synthetic polymer and has a separation function, is inferior in mechanical strength when used alone and, therefore, is typically integrated with a support such as a nonwoven fabric and a woven fabric.

The membrane having a separation function is typically formed by a method of casting and fixing a resin solution as a stock solution of the membrane onto a support such as a nonwoven fabric and a woven fabric. For semipermeable membranes such as reverse osmosis membranes, there has been used a method of casting a resin solution onto a nonwoven fabric, a woven fabric, or the like to form a support layer and then forming a semipermeable membrane on the support layer. The nonwoven fabric, the woven fabric, or the like used as the support is thus required to have a superior membrane formability sufficient to prevent excessive permeation and resulting a bleed-through of the cast resin solution, peel-off of the membrane substance, and any other defect such as nonuniform membrane or pin hole due to, for example, fluffing of the support.

As such a separation membrane support and a method of producing the separation membrane support, there has been proposed a separation membrane support characterized by being formed of a nonwoven fabric based on thermocompression bonding of spunbonded nonwoven fabrics in which temperatures of upper and lower rolls of a pair of metal flat rolls are changed or thermocompression bonding with a metal flat roll and an elastic roll not heated (see Patent Document 1). However, as in this proposal, if a large temperature difference is provided between the upper and lower rolls of the metal flat roll, or if thermocompression bonding is performed using an elastic roll not heated, a difference naturally occurs between the front and back surfaces of the spunbonded nonwoven fabric, and there has been a problem that the spunbonded nonwoven fabric curls in the width direction.

On the other hand, there has been proposed a separation membrane support obtained by laminating and integrating two or more layers of nonwoven fabric sheets formed of fibers having different spinning speeds with a metal flat roll provided with a temperature difference and an elastic roll (see Patent Document 2). Indeed, with this proposed method, the curl in the width direction of the nonwoven fabric sheet can be improved.

Apart from that, a spunbonded nonwoven fabric having a smooth surface based on thermocompression bonding with a pair of metal flat rollers has been proposed (see Patent Document 3). As in this proposal, according to the method of thermocompression bonding with a pair of metal flat rolls, it is certainly possible to obtain a spunbonded nonwoven fabric having no difference in the front and back surfaces, and further improve surface smoothness.

Also, a spunbonded nonwoven separation membrane support prepared by a similar thermocompression bonding method, and contacted with cooling rolls is proposed (see Patent Document 4). With this proposed method, the peel strength and boiling water shrinkage can be improved.

Again, a spunbonded nonwoven separation membrane support prepared by thermocompression bonding (see Patent Document 5). With this proposed method, the surface smoothness and boiling water curling height can be improved.

On the other hand, there has been proposed a separation membrane support for a filter obtained by passing hot air through a fiber web, to perform air-through thermal bonding; and sandwiching the air-through-thermal-bonded fiber web between a pair of flat rolls (see Patent Document 6). Indeed, with this proposed method, the air permeability, rigidity and dust brush-off performance of the nonwoven fabric can be improved.

Patent Document 1: WO 2009/017086 (EP 2174703 A1); Patent Document 2: JP 2016-29221 A; Patent Document 3: JP 2007-284859 A; Patent Document 4: EP 2818229 A1; Patent Document 5: EP 3051014 A1; Patent Document 6: EP 3395426 A1

PROBLEMS TO BE SOLVED BY THE INVENTION

However, in the proposal of Patent Document 2, although the degree of curl in the width direction of the nonwoven fabric sheet can be reduced, the curl cannot be perfectly eliminated, and in addition, since the nonwoven fabric sheet is extremely dense, there is a problem that a cast resin solution is hard to intrude into the nonwoven fabric sheet and membrane peeling strength is lowered.

In the proposal of Patent Document 3, it is necessary to perform thermocompression bonding at a high temperature in order to adhere fibers sufficiently to the inside of the spunbonded nonwoven fabric, so that the fibers are partly excessively thermally fused with each other, and there is a problem that the surface becomes film-like, a cast resin solution does not intrude into the spunbonded nonwoven fabric, and a membrane substance peels off.

It is an object of the present invention to provide a spunbonded nonwoven fabric which has a smooth surface, is highly unlikely to cause a widthwise curl due to a difference between the states of front and back surfaces, has a superior membrane formability sufficient to prevent a bleed-through of a resin due to excessive permeation of a cast resin solution serving as a membrane formation stock solution, peel-off of a membrane substance, and any other defect such as nonuniform membrane or pin hole due to, for example, fluffing of the support, and further exhibits membrane bondability that is strong enough to prevent the membrane substance from peeling off after membrane formation.

Another object of the present invention is to provide a production method for a spunbonded nonwoven fabric in which a spunbonded nonwoven fabric having the above characteristics can be stably produced with an excellent spinning property.

SOLUTIONS TO THE PROBLEMS

The spunbonded nonwoven fabric of the present invention is a spunbonded nonwoven fabric composed of thermoplastic fibers. In this spunbonded nonwoven fabric, the thermoplastic fiber is a conjugate fiber in which a low-melting polymer having a melting point lower by 10 to 140°C than that of a high-melting polymer is provided around the high-melting polymer, an apparent single fiber fineness of the conjugate fiber as viewed from the surface of the spunbonded nonwoven fabric is 0.5 dtex or more and 10 dtex or less. When the apparent single fiber fineness of the conjugate fiber is 0.5 dtex or more and less than 2 dtex, an apparent density is 0.50 to 0.70 g/cm$^3$, and air permeability satisfies the following [formula 1]. When the apparent single fiber fineness of the conjugate fiber is 2 dtex or more and 10 dtex or less, the apparent density is 0.50 to 0.80 g/cm3, and the air permeability satisfies the following [formula 2].

$$. \ 3.8 \times 10^4 \times [\text{basis weight (g/m}^2)]^{-2} \leq [\text{air permeablity (cc/cm}^2 \cdot \text{sec})] \leq 6.0 \times 10^4 \times [\text{basis weight (g/m}^2))^{-2}$$

$$. \ 2.2 \times 10^4 \times [\text{basis weight (g/m}^2)]^{-2} \leq [\text{air permeablity (cc/cm}^2 \cdot \text{sec})] \leq 4.6 \times 10^4 \times [\text{basis weight (g/m}^2))^{-2}$$

wherein the apparent single fiber fineness of the conjugate fiber, the apparent density of the spunbonded nonwoven fabric and the air permeability of the spunbond nonwoven fabric are measured according to the methods disclosed herein. The spunbonded nonwoven fabric is produced by a production method comprising the following steps (a) to (d) sequentially in this order:

(a) spinning, from a spinneret, a conjugate fiber in which a low-melting polymer having a melting point lower by 10 to 140°C than that of a high-melting polymer is provided around the high-melting polymer,
(b) stretching the spun conjugate fibers by suction flow using a high-speed suction gas and collecting the fibers on a moving net conveyor to form the collected fibers into a nonwoven web,
(c) thermally bonding the obtained nonwoven web with a pair of upper and lower flat rolls at a temperature lower by 65 to 95°C than the melting point of the low-melting polymer, and
(d) subsequently thermally bonding with the pair of upper and lower flat rolls at a temperature lower by 5 to 60°C than the melting point of the low-melting polymer.

According to a preferred embodiment of the spunbonded nonwoven fabric of the present invention, the apparent single fiber fineness of the conjugate fiber as viewed from the surface of the spunbonded nonwoven fabric is 0.5 dtex or more and less than 2 dtex, and the Bekk smoothness of at least one surface of the spunbonded nonwoven fabric is 1 to 10 seconds, wherein the Bekk smoothness is measured according to the method disclosed herein.

According to a preferred embodiment of the spunbonded nonwoven fabric of the present invention, the apparent single fiber fineness of the conjugate fiber as viewed from the surface of the spunbonded nonwoven fabric is 2 dtex or more and 10 dtex or less, and the Bekk smoothness of at least one surface of the spunbonded nonwoven fabric is 3 to 20 seconds, wherein the Bekk smoothness is measured according to the method disclosed herein.

According to a preferred embodiment of the spunbonded nonwoven fabric of the present invention, the basis weight of the spunbonded nonwoven fabric is 10 to 150 g/m$^2$.

According to a preferred embodiment of the spunbonded nonwoven fabric of the present invention, the thermoplastic fiber is a polyester fiber.

According to a preferred embodiment of the spunbonded nonwoven fabric of the present invention, a movable amorphous content of the thermoplastic fiber is 35 to 50%, wherein the movable amorphous content is measured according to the method disclosed herein.

According to a preferred embodiment of the spunbonded nonwoven fabric of the present invention, a separation membrane support can be formed by using the spunbonded nonwoven fabric.

A production method for a spunbonded nonwoven fabric of the present invention is a production method for a spunbonded nonwoven fabric characterized in that the following steps (a) to (d) are sequentially performed:

(a) spinning, from a spinneret, a conjugate fiber in which a low-melting polymer having a melting point lower by 10 to 140°C than that of a high-melting polymer is provided around the high-melting polymer,
(b) stretching the spun conjugate fibers by suction flow using a high-speed suction gas and collecting the fibers on a moving net conveyor to form the collected fibers into a nonwoven web,
(c) thermally bonding the obtained nonwoven web with a pair of upper and lower flat rolls at a temperature lower by 65 to 95°C than the melting point of the low-melting polymer, and
(d) subsequently thermally bonding with the pair of upper and lower flat rolls at a temperature lower by 5 to 60°C than the melting point of the low-melting polymer.

According to a preferred embodiment of the production method for a spunbonded nonwoven fabric of the present invention, the spinneret of the step (a) is a spinneret having a round discharge orifice.

According to a preferred embodiment of the production method for a spunbonded nonwoven fabric of the present invention, the spinneret of the step (a) is a spinneret having a discharge orifice having an aspect ratio (long side length/short side length) of 1.6 to 8.

According to a preferred embodiment of the production method for a spunbonded nonwoven fabric of the present invention, the movable amorphous content of the spunbonded nonwoven fabric obtained in the step (c) is 40 to 55%, wherein the movable amorphous content of the spunbonded nonwoven fabric is measured according to the method disclosed herein.

According to a preferred embodiment of the production method for a spunbonded nonwoven fabric of the present invention, the movable amorphous content of the spunbonded nonwoven fabric obtained in the step (d) is 35 to 50%, wherein the movable amorphous content of the spunbonded nonwoven fabric is measured according to the method disclosed herein.

According to a preferred embodiment of the production method for a spunbonded nonwoven fabric of the present invention, the conjugate fiber in the step (a) is a polyester fiber.

EFFECTS OF THE INVENTION

The present invention can provide a spunbonded nonwoven fabric which has a smooth surface, is highly unlikely to cause a widthwise curl due to a difference between the states of front and back surfaces, has a superior membrane formability of not allowing, at the time of casting of a resin solution, a bleed-through of the resin solution due to excessive permeation, a peel-off of a membrane substance, or any other defect such as nonuniform membrane or pin hole due to fluffing of the support, and further exhibits membrane bondability that is strong enough to prevent the membrane substance from peeling off after membrane formation.

In addition, according to the production method for a spunbonded nonwoven fabric of the present invention, a spunbonded nonwoven fabric having the above characteristics can be stably produced with an excellent spinning property.

EMBODIMENTS OF THE INVENTION

A spunbonded nonwoven fabric of the present invention is a spunbonded nonwoven fabric composed of thermoplastic fibers. In this spunbonded nonwoven fabric, the thermoplastic fiber is a conjugate fiber in which a low-melting polymer having a melting point lower by 10 to 140°C than that of a high-melting polymer is provided around the high-melting polymer, an apparent single fiber fineness of the conjugate fiber as viewed from the surface of the spunbonded nonwoven fabric is 0.5 dtex or more and 10 dtex or less. When the apparent single fiber fineness of the conjugate fiber is 0.5 dtex or more and less than 2 dtex, an apparent density is 0.50 to 0.70 g/cm$^3$, and air permeability satisfies the following [formula 1]. When the apparent single fiber fineness of the conjugate fiber is 2 dtex or more and 10 dtex or less, the apparent density is 0.50 to 0.80 g/cm$^3$, and the air permeability satisfies the following [formula 2].

$$. \; 3.8 \times 10^4 \times [\text{basis weight (g/m}^2)]^{-2} \leq [\text{air permeablity (cc/cm}^2 \cdot \text{sec})] \leq 6.0 \times 10^4 \times [\text{basis weight (g/m}^2))^{-2}$$

$$. \; 2.2 \times 10^4 \times [\text{basis weight (g/m}^2)]^{-2} \leq [\text{air permeablity (cc/cm}^2 \cdot \text{sec})] \leq 4.6 \times 10^4 \times [\text{basis weight (g/m}^2))^{-2}$$

The spunbonded nonwoven fabric of the present invention is a long-fiber nonwoven fabric produced by a spunbonding method as defined in claim 1. The spunbonding method is excellent in productivity and mechanical strength and, in addition, can suppress fluffing that is apt to occur in a staple fiber nonwoven fabric, and in a separation membrane support, a superior membrane formability without causing any other defect such as nonuniform membrane or pin hole can be achieved.

It is important that the spunbonded nonwoven fabric of the present invention is formed of conjugate fibers in which a low-melting polymer having a melting point lower by 10 to 140°C than that of a high-melting polymer is provided around the high-melting polymer. When the spunbonded nonwoven fabric of the present invention is formed of conjugate fibers in which a low-melting polymer having a melting point lower by 10 to 140°C than that of a high-melting polymer is provided, the inside of the spunbonded nonwoven fabric can be sufficiently thermally bonded even by thermocompression bonding to the entire surface using a flat roll, and it is possible to obtain a spunbonded nonwoven fabric excellent in mechanical strength. Since fibers firmly bind to each other, in a separation membrane support, nonuniformity in the casting of a resin solution due to fluffing and membrane defects can be suppressed.

By setting a melting point difference between the high-melting polymer and the low-melting polymer to 10°C or higher, preferably 20°C or higher, more preferably 30°C or higher, it is possible to obtain thermobondability contributing to the improvement of the mechanical strength, without deteriorating the strength of the high-melting polymer disposed in a center portion, and, in addition, it is possible to prevent crushing of the fiber due to softening up to the inside of the fiber during thermally bonding and to prevent the spunbonded nonwoven fabric from becoming partially film-like. Furthermore, even when the spunbonded nonwoven fabric is used as a substrate to which a resin layer or a functional membrane is attached to the surface of the spunbonded nonwoven fabric, it is possible to impart excellent attachment processability and bondability.

On the other hand, by setting the melting point difference between the high-melting polymer and the low-melting polymer to preferably 140°C or lower, preferably 120°C or lower, more preferably 100°C or lower, it is possible to suppress that a low-melting polymer component is fused with a hot roll during thermocompression bonding using the hot roll to lower productivity. In addition, it is possible to prevent deformation due to the heat applied when using the nonwoven fabric.

It is important that the apparent density of the spunbonded nonwoven fabric of the present invention is 0.50 to 0.70 g/cm$^3$ when the apparent single fiber fineness of the conjugate fiber as viewed from the surface of the spunbonded nonwoven fabric is 0.5 dtex or more and less than 2 dtex, and the apparent density of the spunbonded nonwoven fabric is 0.50 to 0.80 g/cm$^3$ when the apparent single fiber fineness of the conjugate fiber is 2 dtex or more and 10 dtex or less.

By setting the apparent density to 0.50 g/cm$^3$ or more, preferably 0.55 g/cm$^3$ or more, more preferably 0.60 g/cm$^3$ or more, a spunbonded nonwoven fabric which is excellent in mechanical strength and is less likely to be deformed by external pressure can be formed. In addition, in the separation membrane support, when a resin solution is cast in a membrane forming step, it is possible to prevent a bleed-through of the resin due to excessive permeation and resulting membrane defects.

When the apparent single fiber fineness of the conjugate fiber as viewed from the surface of the spunbonded nonwoven fabric is 0.5 dtex or more and less than 2 dtex, the apparent density is set to 0.70 g/cm$^3$ or less, preferably 0.68 g/cm$^3$ or less, more preferably 0.65 g/cm$^3$ or less, and when the apparent single fiber fineness of the conjugate fiber is 2 dtex or more and 10 dtex or less, the apparent density is set to 0.80 g/cm$^3$ or less, preferably 0.75 g/cm$^3$ or less, more preferably 0.70 g/cm$^3$ or less, whereby air permeability and water permeability of the spunbonded nonwoven fabric can be secured. In the separation membrane support, when the resin solution is cast in the membrane forming step, the resin solution easily enters the inside, and it is possible to obtain excellent peeling strength.

In the spunbonded nonwoven fabric of the present invention, it is a preferred embodiment that the fibers are prevented from being excessively fused with each other, and the spunbonded nonwoven fabric does not form a portion which is partially film-like. According to this constitution, in the separation membrane support, when the resin solution is cast in the membrane forming step, formation of a portion hard to be impregnated with the resin solution can be prevented, and a uniform separation membrane can be formed without peel-off of a membrane substance.

It is important that the air permeability of the spunbonded nonwoven fabric of the present invention satisfies the following [formula 1] when the apparent single fiber fineness of the conjugate fiber as viewed from the surface of the spunbonded nonwoven fabric is 0.5 dtex or more and less than 2 dtex, and the air permeability satisfies the following [formula 2] when the apparent single fiber fineness of the conjugate fiber is 2 dtex or more and 10 dtex or less.

$$. \ 3.8 \times 104 \times [\text{basis weight (g/m}^2)]^{-2} \leq [\text{air permeablity (cc/cm}^2\cdot\text{sec})] \leq 6.0 \times 10^4 \times [\text{basis weight (g/m}^2))^{-2}$$

$$. \ 2.2 \times 10^4 \times [\text{basis weight (g/m}^2)]^{-2} \leq [\text{air permeablity (cc/cm}^2\cdot\text{sec})] \leq 4.6 \times 10^4 \times [\text{basis weight (g/m}^2))^{-2}$$

According to this constitution, it is possible to prevent the spunbonded nonwoven fabric from becoming partially film-like and to prevent impregnation of the resin from deteriorating, and it is possible to obtain a thinner spunbonded nonwoven fabric excellent in mechanical strength.

In addition, the separation membranes differ in their forms depending on filtration accuracy, and the forms include microfiltration membranes, ultrafiltration membranes, nanofiltration membranes, reverse osmosis membranes and the like. For example, the reverse osmosis membrane is used properly for saline water conversion, brine water desalination, and domestic water purifiers, depending on a filtration object.

Although the basis weight of the separation membrane support is appropriately selected according to the uses and a membrane formation method, by providing a spunbonded nonwoven fabric in which, when the apparent single fiber fineness of the conjugate fiber as viewed from the surface of the spunbonded nonwoven fabric is 0.5 dtex or more and less than 2 dtex, the apparent density is 0.50 to 0.70 g/cm$^3$, the air permeability satisfies the above [formula 1], when the apparent single fiber fineness of the conjugate fiber is 2 dtex or more and 10 dtex or less, the apparent density is 0.50 to 0.80 g/cm$^3$, and the air permeability satisfies the above [formula 2], the fibers are not excessively fused with each other, and in the separation membrane support, it is possible to uniformly impregnate the resin internally in the membrane forming step and to form a separation membrane having excellent peeling strength after solidification.

By using the spunbonded nonwoven fabric of the present invention as a separation membrane support, it is possible to improve the water permeability and obtain a separation membrane having a high water-producing capacity. As a method of fixing the cast resin solution onto the separation membrane, there has been widely used a method of immersing the cast resin solution together with the separation membrane support in a solidification liquid mainly containing water, thereby fixing the resin solution onto the separation membrane support. At this time, the solidification liquid penetrates into the support from the opposite side of the separation membrane support on which the resin solution is cast, and solidification of the resin solution, that is, formation of a separation membrane occurs in the separation membrane support.

The spunbonded nonwoven fabric of the present invention is excellent in the water permeability of the solidification liquid mainly containing water, so that the solidification liquid promptly penetrates into the separation membrane support and can solidify the resin solution, and therefore, it is possible to prevent a bleed-through of the resin due to excessive permeation.

When the apparent single fiber fineness of the conjugate fiber as viewed from the surface of the spunbonded nonwoven fabric is 0.5 dtex or more and less than 2 dtex, a preferable range of the air permeability for improving these effects is $4.0 \times 10^4 \times [\text{basis weight (g/m}^2)]^{-2} \leq [\text{air permeability (cc/cm}^2\cdot\text{sec})] \leq 5.8 \times 10^4 \times [\text{basis weight (g/m}^2)]^{-2}$, and a more preferable range is $4.2 \times 10^4 \times [\text{basis weight (g/m}^2)]^{-2} \leq [\text{air permeability (cc/cm}^2\cdot\text{sec})] \leq 5.6 \times 10^4 \times [\text{basis weight (g/m}^2)]^{-2}$. When the apparent single fiber fineness of the conjugate fiber is 2 dtex or more and 10 dtex or less, a preferable range of the air permeability is $2.3 \times 10^4 \times [\text{basis weight (g/m}^2)]^{-2} \leq [\text{air permeability (cc/cm}^2\cdot\text{sec})] \leq 4.2 \times 10^4 \times [\text{basis weight (g/m}^2)]^{-2}$, and a more preferable range is $2.5 \times 10^4 \times [\text{basis weight (g/m}^2)]^{-2} \leq [\text{air permeability (cc/cm}^2\cdot\text{sec})] \leq 3.8 \times 10^4 \times [\text{basis weight (g/m}^2)]^{-2}$.

The movable amorphous content of the thermoplastic fiber constituting the spunbonded nonwoven fabric of the present invention is preferably 35 to 50%. By setting the movable amorphous content of the spunbonded nonwoven fabric to preferably 35 to 50% or more, more preferably 37 to 48% or more, further preferably 38 to 46%, the fibers are firmly thermally bonded to each other, and a nonwoven fabric having excellent thermal dimensional stability can be formed. In the separation membrane support, it is possible to obtain a separation membrane support having excellent step passability in the membrane forming step and an elementization step.

In the spunbonded nonwoven fabric of the present invention, when the apparent single fiber fineness of the conjugate fiber as viewed from the surface of the spunbonded nonwoven fabric is 0.5 dtex or more and less than 2 dtex, the Bekk smoothness of at least one surface is preferably 1 to 10 seconds. By setting the Bekk smoothness of at least one surface to 10 seconds or less, more preferably 8 seconds or less, further preferably 6 seconds or less, it is possible to prevent the surface of the spunbonded nonwoven fabric from becoming partially film-like, leading to loss of the air permeability and the water permeability. In the separation membrane support, when the resin solution is cast on the surface in the membrane forming step, the resin solution more easily enters the inside, an excellent anchor effect is exerted even after solidification, and it is possible to obtain more excellent peeling strength.

The Bekk smoothness of at least one surface is set to 1 second or more, more preferably 2 seconds or more, further preferably 3 seconds or more, whereby, in the separation membrane support, when the resin solution is cast on the surface in the membrane forming step, it is possible to prevent nonuniformity of thickness of a membrane-forming resin due to unevenness of a substrate. As a substrate to which a resin layer or a functional membrane is attached to the surface, it is possible to provide excellent attachment processability and bondability.

When the apparent single fiber fineness of the conjugate fiber as viewed from the surface of the spunbonded nonwoven fabric is 2 dtex or more and 10 dtex or less, the Bekk smoothness of at least one surface is preferably 3 to 20 seconds. By setting the Bekk smoothness of at least one surface to 20 seconds or less, more preferably 17 seconds or less, further preferably 15 seconds or less, the spunbonded nonwoven fabric is not crushed more than necessary, or the surface does not become partially film-like, and the air permeability and the water permeability of the spunbonded nonwoven fabric can be secured. In the separation membrane support, when the resin solution is cast on the surface in the membrane forming step, the resin solution more easily enters the inside, an excellent anchor effect is exerted even after solidification, and it is possible to obtain more excellent peeling strength.

The Bekk smoothness is set to 3 seconds or more, more preferably 4 seconds or more, further preferably 5 seconds or more, whereby, in the separation membrane support, when the resin solution is cast on the surface in the membrane forming step, it is possible to enhance the effect of preventing occurrence of a bleed-through of the resin solution due to excessive permeation. As a substrate to which a resin layer or a functional membrane is attached to the surface, it is possible to provide excellent attachment processability and bondability.

The basis weight of the spunbonded nonwoven fabric of the present invention is preferably 10 to 150 g/m$^2$. By setting the basis weight to preferably 10 g/m$^2$ or more, more preferably 30 g/m$^2$ or more, further preferably 50 g/m$^2$ or more, a spunbonded nonwoven fabric having high mechanical strength and excellent dimensional stability can be formed. In the separation membrane support, when a resin solution is cast in the membrane forming step, it is possible to enhance the effect of preventing a bleed-through of the resin solution due to excessive permeation and resulting membrane defects.

On the other hand, by setting the basis weight to preferably 150 g/m$^2$ or less, more preferably 120 g/m$^2$ or less, further preferably 90 g/m$^2$ or less, the inside of the spunbonded nonwoven fabric can be sufficiently thermally bonded even by thermocompression bonding to the entire surface using a flat roll, and it is possible to obtain a spunbonded nonwoven fabric free from delamination and excellent in mechanical strength. In the separation membrane support, a thickness of the separation membrane can be reduced to increase an area of the separation membrane per a fluid separation element unit.

The thickness of the spunbonded nonwoven fabric of the present invention is preferably 0.02 to 0.25 mm. By setting the thickness of the nonwoven fabric to preferably 0.02 mm or more, more preferably 0.04 mm or more, further preferably 0.06 mm or more, a spunbonded nonwoven fabric having high mechanical strength and excellent dimensional stability can be formed. In the separation membrane support, when a resin solution is cast in the membrane forming step, it is possible to enhance the effect of preventing a bleed-through of the resin due to excessive permeation and resulting membrane defects.

On the other hand, by setting the thickness of the spunbonded nonwoven fabric to preferably 0.25 mm or less, more preferably 0.20 mm or less, further preferably 0.15 mm or less, the inside of the spunbonded nonwoven fabric can be sufficiently thermally bonded even by thermocompression bonding to the entire surface using a flat roll, and it is possible to obtain a spunbonded nonwoven fabric free from delamination and excellent in mechanical strength. In the separation membrane support, a thickness of the separation membrane can be reduced to increase an area of the separation membrane per a fluid separation element unit.

It is important that the apparent single fiber fineness of the conjugate fiber as viewed from the surface of the spunbonded nonwoven fabric of the present invention is 0.5 dtex or more and 10 dtex or less. The apparent single fiber fineness of the conjugate fiber as viewed from the surface of the spunbonded nonwoven fabric represents a fineness calculated by the following [formula 3] from an apparent single fiber diameter obtained when the surface of the spunbonded nonwoven fabric is viewed from directly above (the vertical direction with respect to the surface direction). The apparent fiber diameter of the conjugate fiber as viewed from the surface of the spunbonded nonwoven fabric differs depending on the cross-sectional shape of the fiber and how the fibers are packed, and differs from the average single fiber fineness calculated from the cross-sectional area of the single fiber.

On the surface of the spunbonded nonwoven fabric, in a portion in which the fibers overlap each other in the thickness direction of the spunbonded nonwoven fabric, the fibers are largely crushed by thermocompression bonding, and there exists a nodular portion in which the apparent single fiber diameter is partially increased. However, when the apparent single fiber fineness is calculated, it is important to measure the apparent single fiber diameter at a portion with the smallest single fiber diameter excluding such a node-like portion. At such a node-like portion in which the fibers are partially crushed to increase the diameter, the single fiber diameter varies depending on how the fibers overlap in the thickness direction and the degree of thermocompression bonding, so that the apparent single fiber fineness as an important characteristic value of the present invention cannot be suitably evaluated.

. Apparent single fiber fineness = (apparent average single fiber daimeter/2)$^2 \times \Pi \times$ (resin density)/100

When the cross-sectional shape of the thermoplastic fiber constituting the spunbonded nonwoven fabric of the present invention is round before thermocompression bonding, the apparent single fiber fineness of the conjugate fiber as viewed from the surface of the spunbonded nonwoven fabric is 0.5 dtex or more, preferably 0.8 dtex or more, more preferably 1.0 dtex or more, so that the spinning property is less likely to be reduced when the spunbonded nonwoven fabric is produced, and the air permeability and the water permeability of the spunbonded nonwoven fabric can be secured. In the separation membrane support, when a solution is cast in the membrane forming step, a resin solution easily enters the inside, and it is possible to obtain excellent peeling strength.

On the other hand, by setting the apparent single fiber fineness to less than 2 dtex, preferably 1.8 dtex or less, and more preferably 1.6 dtex or less, it is possible to obtain a spunbonded nonwoven fabric which is excellent in uniformity of formation and surface smoothness and has high density. In the separation membrane support, when a resin solution is cast in the membrane forming step, it is possible to enhance the effect of preventing a bleed-through of the resin due to excessive permeation and resulting membrane defects.

On the other hand, when the cross-sectional shape of the thermoplastic fiber constituting the spunbonded nonwoven fabric of the present invention is an elliptical shape or a flattened shape before thermocompression bonding, the apparent single fiber fineness of the conjugate fiber as viewed from the surface of the spunbonded nonwoven fabric is 2 dtex or more, preferably 2.2 dtex or more, more preferably 2.3 dtex or more, so that the spinning property is less likely to be reduced when the spunbonded nonwoven fabric is produced, in the separation membrane support, the resin solution cast on the support in the membrane forming step excessively penetrates to the opposite side of a membrane forming surface, and it is possible to suppress that membrane defects occur during winding and to obtain a superior membrane formability.

On the other hand, by setting the apparent single fiber fineness to 10 dtex or less, preferably 7 dtex or less, more preferably 5 dtex or less, it is possible to obtain a spunbonded nonwoven fabric which is excellent in uniformity of formation and surface smoothness and has high density. In the separation membrane support, when the resin solution is cast in the membrane forming step, the resin solution easily enters the inside through interstices between the fibers, and it is possible to obtain excellent peeling strength.

The tensile strength per basis weight in a machine direction of the spunbonded nonwoven fabric of the present invention is preferably 4 to 8 N/5 cm/(g/m$^2$). By setting the tensile strength per basis weight in the machine direction to preferably 4 N/5 cm/(g/m$^2$) or more, more preferably 4.5 N/5 cm/(g/m$^2$) or more, further preferably 5 N/5 cm/(g/m$^2$) or more, it is possible to obtain a spunbonded nonwoven fabric free from fluffing and delamination and having practical mechanical strength.

On the other hand, by setting the tensile strength per basis weight in the machine direction to preferably 8 N/5 cm/(g/m$^2$) or less, more preferably 7.5 N/5 cm/(g/m$^2$) or less, further preferably 7 N/5 cm/(g/m$^2$) or less, it is possible to prevent the spunbonded nonwoven fabric from excessively bonding and becoming film-like and to secure the air permeability and the water permeability of the spunbonded nonwoven fabric.

Examples of a resin of thermoplastic fibers constituting the spunbonded nonwoven fabric of the present invention include polyester polymers, polyamide polymers, polyolefin polymers, and mixtures or copolymers thereof. Among these, the thermoplastic fibers constituting the spunbonded nonwoven fabric of the present invention are preferably polyester fibers formed of a polyester polymer because polyester fibers are excellent in spinnability of the fiber and have excellent properties such as mechanical strength, rigidity, heat resistance, water resistance and chemical resistance.

The thermoplastic fiber may contain nucleating agent, matting agent, pigment, fungicide, antimicrobial agent, flame retardant, light stabilizer, UV absorbent, antioxidant, filler, lubricating agent, hydrophilizing agent, and the like. Specifically, metal oxides such as titanium oxide have an effect of reducing the surface friction of fibers to prevent the fusion among fibers, resulting in the improvement in spinning property and also have an effect of increasing heat conductivity, resulting in improvement in the bondability of the spunbonded nonwoven fabric in the thermocompression molding with hot rolls. Aliphatic bisamides such as ethylene-bis-stearic acid amide, and/or alkyl-substituted aliphatic monoamides effectively increase the mold-releasing property between the hot roll and a nonwoven fabric web to improve the conveying performance.

The polyester polymer is a polyester composed of an acid component and an alcohol component. Examples of usable acid components include aromatic carboxylic acids such as terephthalic acid, isophthalic acid, and phthalic acid; aliphatic dicarboxylic acids such as adipic acid and sebacic acid; and alicyclic dicarboxylic acids such as cyclohexane carboxylic acid. Examples of usable alcohol components include ethylene glycol, diethylene glycol, and polyethylene glycol.

Examples of the polyester polymer include polyethylene terephthalate, polybutylene terephthalate, polytrimethylene terephthalate, polyethylene naphthalate, polylactic acid, polybutylene succinate, and copolymers of these. Among them, polyethylene terephthalate is preferably used.

In addition, biodegradable polymers (resins) are also preferably used as the polymer of fibers constituting the spunbonded nonwoven fabric because the biodegradable resins are easily discarded after use and environmentally friendly. Examples of the biodegradable resin include polylactic acid, polybutylene succinate, polycaprolactone, polyethylene succinate, polyglycolic acid, and polyhydroxybutyrate. Among these, the polylactic acid is preferably used because it is a resin derived from plants, does not waste oil resources, has comparatively high mechanical characteristics and heat resistance, and is a biodegradable resin inexpensively produced. Examples of the polylactic acid particularly preferably used include poly(D-lactic acid), poly(L-lactic acid), copolymers of D-lactic acid and L-lactic acid, and blends of these.

The spunbonded nonwoven fabric of the present invention is formed of conjugate fibers in which a low-melting polymer having a melting point lower by 10 to 140°C than that of a high-melting polymer is provided around the high-melting polymer.

The melting point of the high-melting polymer is preferably 160 to 320°C because membrane formability when forming the separation membrane on the separation membrane support is good and a highly durable separation membrane can be obtained, when the spunbonded nonwoven fabric of the present invention is used as the separation membrane support. By setting the melting point of the high-melting polymer to preferably 160°C or higher, more preferably 170°C or higher, further preferably 180°C or higher, heat resistance can be improved. In addition, dimensional stability to heat is imparted, in the separation membrane support, a dimensional change is made small even when heat is applied during casting of the resin solution in the membrane forming step or in a fluid separation element producing step, and good membrane formability and processability can be obtained.

On the other hand, the high-melting polymer preferably has a melting point of 320°C or lower, more preferably 300°C or lower, and further preferably 280°C or lower in terms of suppression of thermal energy consumed for melting the high-melting polymer in the production of a spunbonded nonwoven fabric, that is, suppression of productivity decline.

The component ratio of the low-melting polymer contained in the conjugate fiber is preferably 10 to 40% by mass. By setting the component ratio of the low-melting polymer to preferably 40% by mass or less, more preferably 30% by mass or less, further preferably 25% by mass or less, it is possible to suppress deformation against heat applied when the spunbonded nonwoven fabric is used.

On the other hand, by setting the component ratio of the low-melting polymer contained in the conjugate fiber to 10% by mass or more, more preferably 15% by mass or more, further preferably 20% by mass or more, it is possible to obtain thermobondability contributing to the improvement of the mechanical strength of the spunbonded nonwoven fabric. Since fibers firmly bind to each other, in the separation membrane support, membrane defects in the casting of a resin solution caused by fluffing can be suppressed.

Examples of the combination of the high-melting polymer and the low-melting polymer (high-melting polymer/low-melting polymer) include polyethylene terephthalate/polybutylene terephthalate, polyethylene terephthalate/polytrimethylene terephthalate, polyethylene terephthalate/polylactic acid, and polyethylene terephthalate/copolymerized polyethylene terephthalate. In addition, isophthalic acid or the like is preferably used as a copolymerization component of the copolymerized polyethylene terephthalate, and among these combinations, a combination of polyethylene terephthalate/isophthalate copolymerized polyethylene terephthalate is particularly preferably used.

As a conjugate form of the conjugate fiber, for example, a conjugate form such as a concentric core-sheath type, an eccentric core-sheath type, and a sea-island type can be used from a viewpoint of efficiently obtaining thermally bonding point between fibers. Examples of cross-sectional shapes of conjugate fibers constituting the spunbonded nonwoven fabric include shapes such as circular cross-sections, flat cross-sections, elliptical cross-sections, polygonal cross-sections, multi-lobed cross-sections, and hollow cross-sections. Among these, it is preferable to use a concentric core-sheath type as the conjugate form and a circular cross-section or a flat cross-section as the cross-sectional shape of the conjugate fiber. By using such a conjugate form, it is possible to strongly bond the fibers to each other by thermocompression bonding.

Next, a production method for the spunbonded nonwoven fabric of the present invention will be described.

A production method for a spunbonded nonwoven fabric of the present invention is a production method for a spunbonded nonwoven fabric characterized in that the following steps (a) to (d) are sequentially performed:

(a) spinning, from a spinneret, a conjugate fiber in which a low-melting polymer having a melting point lower by 10 to 140°C than that of a high-melting polymer is provided around the high-melting polymer,
(b) stretching the spun conjugate fibers by suction flow using a high-speed suction gas and collecting the fibers on a moving net conveyor to form the collected fibers into a nonwoven web,
(c) thermally bonding the obtained nonwoven web with a pair of upper and lower flat rolls at a temperature lower by 65 to 95°C than the melting point of the low-melting polymer, and
(d) subsequently thermally bonding with the pair of upper and lower flat rolls at a temperature lower by 65 to 95°C than the melting point of the low-melting polymer.

In the production method for a spunbonded nonwoven fabric of the present invention, a usual conjugate spinning method can be adopted for spinning the conjugate fibers. As a conjugate form of the conjugate fiber, for example, a conjugate form such as the concentric core-sheath type, the eccentric core-sheath type, and the sea-island type described above can be used from a viewpoint of efficiently obtaining thermally bonding point between fibers. Examples of cross-sectional shapes of fibers constituting the spunbonded nonwoven fabric include shapes such as circular cross-sections, flat cross-sections, elliptical cross-sections, polygonal cross-sections, multi-lobed cross-sections, and hollow cross-sections. Among these, it is preferable to use a concentric core-sheath type as the conjugate form and a circular cross-section, an elliptical cross-section, or a flat cross-section as the cross-sectional shape of the fiber. By using such a conjugate form, it is possible to strongly bond the fibers to each other by thermocompression bonding.

It is preferable that fibers having circular cross-sectional shapes are produced using a spinneret having a round discharge orifice. According to this constitution, deterioration of a spinning property can be prevented.

In the production method for a spunbonded nonwoven fabric of the present invention, the cross-sectional shape of the conjugate fiber collected by a collection net is preferably an elliptical shape or a flattened shape. When a long axis length of a fiber transverse section is a and a short axis length thereof is b, a fiber flatness is represented by a/b, and the fiber flatness is preferably in the range of 1.2 to 8.

Here, the long axis length a of the fiber cross-section is a diameter of a circumscribed circle drawn so as to circumscribe the fiber cross-section when the fiber is viewed from the fiber axis direction. When a perpendicular is drawn in a direction perpendicularly crossing with a straight line (corresponding to a diameter of the circumscribed circle) connecting a contact point between the circumscribed circle and the fiber outer circumference, the short axis length b of the fiber cross-section means a maximum length obtained when the perpendicular cuts the fiber cross-section.

By setting the fiber flatness to preferably 1.2 or more, more preferably 1.5 or more, further preferably 1.7 or more, the thickness of the spunbonded nonwoven fabric can be reduced. In the separation membrane support, when the resin solution is cast in the membrane forming step, the fiber becomes a barrier against excessive permeation into the spunbonded nonwoven fabric, so that it is possible to suppress a bleed-through of the resin solution and to improve the membrane formability.

On the other hand, by setting the fiber flatness to preferably 8 or less, more preferably 5 or less, further preferably 3 or less, it is possible to prevent deterioration of the spinning property and deterioration of unevenness in basis weight due to an influence of an air flow on spun fibers.

Fibers having an elliptical cross-sectional shape or a flattened cross-sectional shape can be produced using a spinneret having a discharge orifice having a rectangular shape, an elliptical shape, or the like in which a length in the long side direction differs from a length in the short side direction. An aspect ratio (long side length/short side length) of the discharge orifice is preferably 1.6 to 8. The aspect ratio of the discharge orifice is a value obtained by dividing the length of the discharge orifice in the long side direction by the length in the short side direction. By setting the aspect ratio of the discharge orifice to preferably 1.6 or more, more preferably 3 or more, further preferably 5 or more, the fiber flatness after stretching by suction flow using a high-speed suction gas in the step (b) can be set to 1.5 or more.

On the other hand, by setting the aspect ratio of the discharge orifice to 8 or less, preferably 7 or less, more preferably 6 or less, it is possible to prevent deterioration of the spinning property, to suppress an increase in back pressure of the spinneret during spinning, and to reduce a single hole cross-sectional area of the discharge orifice to make suitable for spinning of small fineness.

When the discharge orifice has a rectangular shape, it is preferable that the corner is rounded and curved. According to this constitution, the spinning property can be improved.

The short side length of the discharge orifice is preferably 0.15 mm or more, more preferably 0.17 mm or more, further preferably 0.20 mm or more. By thus setting the short side length, it is possible to prevent that yarn cooling of a spun yarn rapidly progresses, yarn breakage or stretching defect occurs, or the discharge orifice is hard to wash at the time of washing the spinneret, and a polymer and a carbide remain.

In the production method for a spunbonded nonwoven fabric of the present invention, first, a molten thermoplastic polymer is spun from the spinneret and stretched by suction flow using a high-speed suction gas. Then, the fibers are collected on a moving net conveyor and formed into a nonwoven web.

At this time, in order to prevent generation of wrinkles due to shrinkage of the fibers during thermocompression bonding in a subsequent step, or a decrease in productivity due to fusion of the low-melting polymer component to the hot roll, it is preferable to more highly orient and crystallize the fibers constituting the obtained nonwoven web. Thus, a spinning rate is preferably 3000 m/min or more, more preferably 3500 m/min or more, further preferably 4000 m/min or more. In addition, by preventing excessive orientation and crystallization of the fibers, it is possible to obtain thermobondability contributing to the improvement of the mechanical strength of the spunbonded nonwoven fabric, and therefore, the spinning rate is preferably 5500 m/min or less, more preferably 5000 m/min or less, further preferably 4500 m/min or less.

In the production method for the spunbonded nonwoven fabric of the present invention, the average single fiber fineness of the thermoplastic fiber constituting the spunbonded nonwoven fabric is preferably 0.5 to 3 dtex. By setting the average single fiber fineness to preferably 0.5 dtex or more, more preferably 0.8 dtex or more, further preferably 1.0 dtex or more, the spinning property is less likely to be reduced when the spunbonded nonwoven fabric is produced, and the air permeability and the water permeability of the spunbonded nonwoven fabric can be secured.

On the other hand, by setting the average single fiber fineness to preferably 3 dtex or less, more preferably 2.5 dtex or less, further preferably 2 dtex or less, it is possible to obtain a spunbonded nonwoven fabric excellent in uniformity of formation and surface smoothness.

In the production method for the spunbonded nonwoven fabric of the present invention, it is possible to produce a spunbonded nonwoven fabric in which occurrence of a widthwise curl due to the difference between the states of front and back surfaces is extremely small, the fibers are prevented from being excessively fused with each other, and the spunbonded nonwoven fabric does not have a portion which is partially film-like. When such a spunbonded nonwoven fabric is produced, in the separation membrane support, when the resin solution is cast in the membrane forming step, formation of a portion hard to be impregnated with the resin solution can be prevented, and a uniform separation membrane can be formed without peel-off of a membrane substance. In order to produce such a spunbonded nonwoven fabric, in the production method for a spunbonded nonwoven fabric of the present invention, it is important to apply two-stage thermocompression bonding to be described next to a nonwoven web collected by the net conveyor.

First, the first thermocompression bonding is applied to the collected nonwoven web by a pair of upper and lower flat rollers. The pair of upper and lower flat rolls is a metal roll or an elastic roll which is not provided with pits and projections on the surface of the roll. The metal roll and another metal roll can be used in a pair, or the metal roll and the elastic roll can be used in a pair. The elastic roll herein is a roll formed of a material having elasticity as compared to the metal roll. As the elastic roll, a so-called paper roll such as paper, cotton and Aramid Paper, a resin-made roll formed of a urethane resin, an epoxy resin, a silicone resin, a polyester resin, hard rubber or a mixture thereof, or the like are used. Among them, as the pair of upper and lower flat rolls, metal rolls and a combination using metal rolls are preferably used because it is possible to obtain a spunbonded nonwoven fabric excellent in smoothness and having a small thickness CV in the width direction.

The first thermocompression bonding can be carried out using the pair of upper and lower flat rolls placed on both sides of the collection net across the collection net sandwiched therebetween while carrying the nonwoven web with the collection net. In this case, both the upper and lower flat rolls may be heated, and only the roll on the side in contact with the nonwoven web may be heated.

It is important that a roll temperature in the first thermocompression bonding is lower by 65 to 95°C than the melting point of the low-melting polymer. By performing thermocompression bonding at a temperature of -65°C or lower as the melting point of the low-melting polymer, preferably at a temperature of -70°C or lower as the melting point of the low-melting polymer, more preferably at a temperature of -75°C or lower as the melting point of the low-melting polymer, it is possible to prevent the fibers from being excessively fused with each other, to prevent the spunbonded nonwoven fabric from becoming partially film-like, and to prevent the air permeability and the water permeability from excessively lowering, so that a spunbonded nonwoven fabric satisfying a relationship [formula 1] between the basis weight and the air permeability can be obtained finally.

On the other hand, by performing thermocompression bonding at a temperature not lower than -95°C as the melting point of the low-melting polymer, preferably at a temperature not lower than -90°C as the melting point of the low-melting polymer, more preferably at a temperature not lower than -85°C as the melting point of the low-melting polymer, it is possible to obtain thermobondability contributing to the mechanical strength of the spunbonded nonwoven fabric, to prevent the fibers from being excessively fused with each other in the second thermocompression bonding in a subsequent step, and to prevent the spunbonded nonwoven fabric from becoming partially film-like, so that a nonwoven fabric satisfying the relationship formula 1 between the basis weight and the air permeability can be obtained finally. A temperature difference between the upper and lower flat rolls can be set within a range that satisfies the above conditions.

A line pressure in the first thermocompression bonding is preferably 98 to 1960 N/cm. By setting the line pressure to preferably 98 N/5 cm or more, more preferably 294 N/cm or more, further preferably 490 N/cm or more, it is possible to obtain thermobondability contributing to the mechanical strength of the spunbonded nonwoven fabric and to suppress delamination.

On the other hand, by setting the line pressure to preferably not more than 1960 N/cm, more preferably not more than 980 N/cm, further preferably not more than 686 N/cm, it is possible to prevent the fibers from being excessively fused with each other, to prevent the sheet from becoming partially film-like, and to prevent the air permeability and the water permeability from excessively lowering.

However, when the first thermocompression bonding is performed using the pair of upper and lower flat rolls placed on both sides of the collection net across the collection net sandwiched therebetween, in order to prevent damage of the collection net, the line pressure is preferably set to 1 to 49 N/cm.

For example, for the purpose of improving transportability, during a period from collection of the nonwoven web on the net conveyor to the first thermocompression bonding, the nonwoven web can be temporarily thermocompression bonded between the pair of upper and lower flat rolls, or can be temporarily thermocompression bonded between a flat roll and the net conveyor used for collecting the nonwoven web. In this case, in order not to impair the effect of the first thermocompression bonding, it is preferable that the temperature of temporary thermocompression bonding is -65°C or lower as the melting point of the low-melting polymer and the line pressure is 1960 N/cm or less.

In the production method for the spunbonded nonwoven fabric of the present invention, the movable amorphous content of the spunbonded nonwoven fabric obtained by the first thermocompression bonding is preferably 40 to 55%. By setting the movable amorphous content of the spunbonded nonwoven fabric to preferably 40 to 55% or more, more preferably 42 to 53% or more, further preferably 43 to 50%, it is possible to prevent the fibers from being excessively fused with each other, to prevent the spunbonded nonwoven fabric from becoming partially film-like, and to firmly thermally bond the fibers to each other. In addition, even in the second thermocompression bonding in the subsequent step, it is possible to prevent the fibers from being excessively fused with each other and to prevent the spunbonded nonwoven fabric from becoming partially film-like, so that a spunbonded nonwoven fabric satisfying the relationship [formula 1] between the basis weight and the air permeability can be obtained finally. That is, suitable air permeability and water permeability are secured in the spunbonded nonwoven fabric, and it is possible to obtain a spunbonded nonwoven fabric excellent in membrane formability when used as the separation membrane support. In order to obtain a spunbonded fabric having such a movable amorphous content, as described above, it is important to set the roll temperature in the first thermocompression bonding to a temperature lower by 65 to 95°C than the melting point of the low-melting polymer.

Subsequently, the second thermocompression bonding is applied to the spunbonded nonwoven fabric subjected to the first thermocompression bonding by a pair of upper and lower flat rolls. The pair of upper and lower flat rolls is a metal roll or an elastic roll which is not provided with pits and projections on the surface of the roll. The metal roll and another metal roll can be used in a pair, or the metal roll and the elastic roll can be used in a pair. Among them, a combination of a metal roll and a metal roll is preferably used because it is possible to obtain a spunbonded nonwoven fabric excellent in smoothness and having a small thickness CV in the width direction. With the combination of the metal roll and the metal roll, the thickness of the surface of the spunbonded nonwoven fabric can be made uniform, and in the separation membrane support, when the resin solution is cast in the membrane forming step, it is possible to suppress occurrence of a difference in thickness of a membrane-forming resin and to reduce the amount of the resin solution to be used.

It is important that a roll temperature in the second thermocompression bonding is lower by 5 to 60°C than the melting point of the low-melting polymer. By performing thermocompression bonding at a temperature of -5°C or lower as the melting point of the low-melting polymer, preferably at a temperature of -10°C or lower as the melting point of the low-melting polymer, more preferably at a temperature of -20°C or lower as the melting point of the low-melting polymer, it is possible to prevent the fibers from being excessively fused with each other, to prevent the spunbonded nonwoven fabric from becoming partially film-like, and to prevent the air permeability and the water permeability from excessively lowering, so that a spunbonded nonwoven fabric satisfying the relationship formula 1 between the basis weight and the air permeability can be obtained. In addition, it is possible to prevent a low-melting polymer component from fusing with a roll during thermocompression bonding, leading to the reduction of productivity.

On the other hand, thermocompression bonding is performed at a temperature not lower than -60°C as the melting point of the low-melting polymer, preferably at a temperature not lower than -50°C as the melting point of the low-melting polymer, more preferably at a temperature not lower than -40°C as the melting point of the low-melting polymer, whereby it is possible to obtain thermobondability contributing to the mechanical strength of the spunbonded nonwoven fabric and to suppress delamination. The spunbonded nonwoven fabric can be thinned, and in the separation membrane support, the thickness of the separation membrane can be reduced to increase the area of the separation membrane per a fluid separation element unit. A temperature difference between the upper and lower flat rolls can be set within a range that satisfies the above conditions.

A line pressure in the second thermocompression bonding is preferably 98 to 1960 N/cm. By setting the line pressure to preferably 98 N/5 cm or more, more preferably 294 N/cm or more, further preferably 490 N/cm or more, it is possible to obtain thermobondability contributing to the mechanical strength of nonwoven fabrics.

On the other hand, by setting the line pressure to not more than 1960 N/cm, preferably not more than 980 N/cm, more preferably not more than 686 N/cm, it is possible to prevent the fibers from being excessively fused with each other, to prevent the sheet from becoming partially film-like, and to prevent the air permeability and the water permeability from excessively lowering.

For the purpose of, for example, adjusting the physical properties of the spunbonded nonwoven fabric, separate thermocompression bonding can be performed between the first thermocompression bonding and the second thermocompression bonding or after the second thermocompression bonding. In this case, in order not to impair the effect of the second thermocompression bonding, it is preferable that the temperature of the separate thermocompression bonding performed after the first thermocompression bonding is -5°C or lower as the melting point of the low-melting polymer and the line pressure is 1960 N/5 cm or less. However, when thermocompression bonding is performed a plurality of times after the first thermocompression bonding, the thermocompression bonding performed under the condition of the highest roll temperature is taken as the second thermocompression bonding.

In the production method for the spunbonded nonwoven fabric of the present invention, the movable amorphous content of the spunbonded nonwoven fabric obtained by the second thermocompression bonding is preferably 35 to 50%. By setting the movable amorphous content of the spunbonded nonwoven fabric to preferably 35 to 50% or more, more preferably 37 to 48% or more, further preferably 38 to 46%, the fibers can be firmly thermally bonded to each other, and excellent thermal dimensional stability can be imparted. In the separation membrane support, it is possible to obtain a separation membrane support having excellent step passability in the membrane forming step and an elementization step. In order to obtain a spunbonded nonwoven fabric having such a movable amorphous content, as described above, it is important to set the roll temperature in the second thermocompression bonding to a temperature lower by 5 to 60°C than the melting point of the low-melting polymer.

In the production method for the spunbonded nonwoven fabric of the present invention, the first thermocompression bonding and the second thermocompression bonding may be carried out continuously in a production line, or after the first thermocompression bonding, the spunbonded nonwoven fabric may be wound up once, and the spunbonded nonwoven fabric may be wound off again and subjected to the second thermocompression bonding. Particularly, in view of being excellent in productivity, it is preferable that the first thermocompression bonding and the second thermocompression bonding are carried out continuously in a production line.

The spunbonded nonwoven fabric of the present invention has a smooth surface, is highly unlikely to cause a widthwise curl due to a difference between the states of front and back surfaces, has a superior membrane formability sufficient to prevent peel-off of a membrane substance when the resin solution is cast and to prevent any other defect such as nonuniform membrane or pin hole in a membrane due to, for example, fluffing of the support, and further exhibits membrane bondability without peel-off of the membrane substance after membrane formation, and therefore, the spunbonded nonwoven fabric can be suitably used as a separation membrane support.

The spunbonded nonwoven fabric of the present invention is formed of conjugate fibers in which a low-melting polymer having excellent bondability is provided, has a smooth surface, and has no portion which becomes partially film-like and is hard to be impregnated with the resin solution, and therefore, the spunbonded nonwoven fabric is also preferably used as a substrate to which a resin layer or a functional membrane is attached to the surface. As a method of bonding and processing the resin solution, it is possible to use, for example, a method in which a resin film such as a film or a resin material having a predetermined shape is superimposed with the spunbonded nonwoven fabric of the present invention and laminated under heating or a method in which a resin solution imparted with fluidity by a molten resin or a solvent is discharged from a die and directly applied to a nonwoven fabric. As in dip processing, the entire nonwoven fabric may be impregnated with a resin solution and fixed.

The uses of the spunbonded nonwoven fabric of the present invention are not limited to the above uses, and the spunbonded nonwoven fabric can be used for industrial materials such as filters, filter substrates, and electric wire retainer winding materials, building materials such as wallpaper, moisture permeable waterproof sheets, roofing underlaying materials, sound insulation materials, heat insulation materials, and sound absorbing materials, living materials such as wrapping materials, bag materials, signboard materials, and printing base materials, construction materials such as weedproof sheets, drainage materials, ground reinforcement materials, sound insulation materials, and sound absorbing materials, agricultural materials such as whole covering sheets and light shielding sheets, ceiling materials, vehicle materials such as spare tire cover materials, and the like.

EXAMPLES

Next, the spunbonded nonwoven fabric of the present invention and the production method for the spunbonded nonwoven fabric will be described specifically based on Examples.

[Measurement Method]

(1) Intrinsic Viscosity (IV)

The intrinsic viscosity IV of a polyethylene terephthalate resin was determined by the method below. In 100 ml of o-chlorophenol, 8 g of a sample was dissolved, and the relative viscosity $\eta_r$ was determined at a temperature of 25°C with an Ostwald viscometer in accordance with the equation below.

$$\cdot \ \eta_r = \eta/\eta_0 = (t \times d)/(t_0 \times d_0)$$

(wherein $\eta$ represents the viscosity of the polymer solution; $n_0$ represents the viscosity of ortho-chlorophenol; t represents the dropping time (seconds) of the solution; d represents the density of the solution (g/cm$^3$); $t_0$ represents the dropping time (seconds) of ortho-chlorophenol; and $d_0$ represents the density of ortho-chlorophenol (g/cm$^3$).)

Subsequently, the intrinsic viscosity IV was calculated by the following formula from the relative viscosity $\eta_r$.

$$\cdot \ \text{IV} = 0.0242\eta_r + 0.2634.$$

(2) Melting Point of Thermoplastic Resin (°C)

The melting points of thermoplastic resins used were measured by using a differential scanning calorimeter (Q100 manufactured by TA Instruments) under the following conditions, and average of the endothermic peak temperature was calculated and used as the melting point of the resin measured. When the resin before the fiber formation has a plurality of endothermic peaks, the peak temperature on the highest side is adopted. When the fiber is measured, similar measurement can be conducted to estimate the melting point of each component from the plurality of endothermic peaks.

- Measurement atmosphere: nitrogen stream (150 ml/min)
- Temperature range: 30 to 350°C
- Rate of temperature increase: 20°C/min
- Sample amount: 5 mg

(3) Fiber Flatness and Average Single Fiber Fineness (dtex)

Ten small sample pieces were randomly taken from the collected nonwoven fabric, and their cross-sectional images were taken at a magnification of 500 to 3000 using a scanning electron microscope. The fibers taken in a vertical direction with respect to the fiber axis in the micrograph were selected, the long axis length a (um), the short axis length b (um), and a fiber cross-sectional area ($\mu m^2$) of each ten fibers from each small sample piece, that is, a total of 100 fibers, were measured, and the average values of them were obtained. The long axis length a of the fiber cross-section is a diameter of a circumscribed circle drawn so as to circumscribe the fiber cross-section. When a perpendicular is drawn in a direction perpendicularly crossing with a straight line (corresponding to a diameter of the circumscribed circle) connecting a contact point between the circumscribed circle and the fiber outer circumference, the short axis length b of the fiber cross-section means a maximum length obtained when the perpendicular cuts the fiber cross-section.

Subsequently, the fiber flatness and the average single fiber fineness were determined by the following formulae, and rounded to one decimal place. Here, the density of polyethylene terephthalate resin/ copolymerized polyethylene terephthalate resin was 1.38 g/cm$^3$.

·

Fiber flatness = (average value of long axis length a)/ (average value of short side length b)

·

Average single fiber fineness (dtex) = [average value of fiber cross-sectional area ($\mu m^2$)] $\times$ [density of resin (1.38 g/cm$^3$)]/100.

(4) Apparent Single Fiber Fineness (dtex)

Ten small sample pieces were randomly taken from a spunbonded nonwoven fabric, and photographs were taken at a magnification of 500 to 3000 using a scanning electron microscope. Ten single fibers in each sample, 100 single fibers in total, were selected, and the fiber diameter of each single fiber was measured. The apparent average single fiber diameter (um) was determined from an average value of the fiber diameters. On the surface of the nonwoven fabric, in a portion in which the fibers overlap each other in the thickness direction of the spunbonded nonwoven fabric, the fibers are largely crushed by thermocompression bonding, and there exists a nodular portion in which the apparent single fiber diameter is partially increased. However, the fiber diameter of the single fiber was measured at a portion with the smallest single fiber diameter excluding such a node-like portion. Subsequently, the apparent single fiber fineness was determined by the following [formula 3], and rounded to one decimal place. Here, the density of polyethylene terephthalate resin/ copolymerized polyethylene terephthalate resin was 1.38 g/cm$^3$.

. Apparent single fiber fineness (dtex) = ([apparent average single fiber diameter/2) $(\mu m)]^2 \times \Pi \times$ (density of resin $(1.38g/cm^3)/100$

.

(5) Basis Weight of Spunbonded Nonwoven Fabric (g/m$^2$)

In the measurement of the basis weight of the spunbonded nonwoven fabric, three test pieces each having a size of 30 cm $\times$ 50 cm were taken per 1 m at equal intervals along the width direction according to 6.2 of JIS L1913 (2010 edition) "Determination of mass per unit area," and mass (g) of each test piece at standard state was measured. The average value was rounded to an integer and expressed as mass per 1 m$^2$ (g/m$^2$).

(6) Thickness of Spunbonded Nonwoven Fabric (mm)

According to 5.1 of JIS L1906 (2000 edition), thicknesses of 10 locations equally spaced per 1 m in a width direction of a spunbonded nonwoven fabric were measured in hundredth of a millimeter, applying a load of 10 kPa by use of an indenter of 10 mm in diameter, and an average value of measurements was rounded off to two decimal places.

(7) Apparent Density of Spunbonded Nonwoven Fabric (g/cm$^3$)

The apparent density (g/cm$^3$) was calculated using the following formula from the basis weight (g/m$^2$) of the spunbonded nonwoven fabric before rounding obtained in the above (4) and the thickness (mm) of the spunbonded nonwoven fabric before rounding obtained in the above (5), and the apparent density was rounded to two decimal places.

. Apparent density (g/cm$^3$) = [basis weight (g/m$^2$)] / [thickness (mn)] $\times 10^{-3}$.

(8) Movable Amorphous Content of Spunbonded Nonwoven Fabric (%)

Two samples were arbitrarily collected from the spunbonded nonwoven fabric, a movable amorphous content (%) was calculated by the following equation under the following conditions using a temperature modulation DSC (Q1000 manufactured by TA Instruments Inc.), and the first decimal place of the average value was rounded off. An amount of specific heat change before and after glass transition temperature in a complete amorphous state was set as 0.4052 J/g°C.

· Measurement atmosphere: nitrogen flow (50 ml/min)
· Temperature range: 0 to 300°C
· Rate of temperature increase: 2°C/min
· Sample amount: 5 mg
·

Movable amorphous content (%)=[amount of specific heat change before and after glass transition temperature (J/g°C)]/[amount of specific heat change before and after glass transition temperature in complete amorphous state (J/g°C)] $\times$ 100.

(9) Air Permeability of Spunbonded Nonwoven Fabric (cc/cm$^2$·sec)

10 test pieces of 10 cm square were taken per 1 m at equal intervals along a width direction of a nonwoven fabric according to Frazier method of JIS L1913 (2010), and the air permeability of the spunbonded nonwoven fabric was measured by using gas flow tester FX3300 manufactured by TEXTEST at a test pressure of 125 Pa. The obtained value was averaged, the average was rounded to one decimal place for use as the air permeability (cc/cm$^2$·sec).

(10) Bekk Smoothness of Spunbonded Nonwoven Fabric (sec)

In the measurement of the Bekk smoothness of the spunbonded nonwoven fabric, five places per 1 m at equal intervals along a width direction from both surfaces of the spunbonded nonwoven fabric were measured using a Bekk smoothness testing machine according to JIS P8119 (1998 edition). Subsequently, values obtained by rounding an average value of five places to an integer were compared, and the smaller value was taken as a representative value of the Bekk smoothness. Except for Comparative Example 3, in the separation membrane formation in the following Examples and Comparative Examples, the surface with the smaller Bekk smoothness was used as a membrane forming surface.

(11) Tensile Strength Per Basis Weight of Spunbonded Nonwoven Fabric (N/5 cm/(g/m$^2$))

The tensile strength of the spunbonded nonwoven fabric was measured according to 6.3.1 of JIS L1913 (2010 edition). Test pieces each having a size of 5 cm $\times$ 30 cm whose long side corresponded to the machine direction and the transverse direction were taken from three places per 1 m at equal intervals along a width direction, and tensile tests were carried out at a grip distance of 20 cm and a tensile rate of 10 cm/minute using a constant speed elongation type tensile testing machine. The strength at the time of stretching the sample to break was read out, and a value obtained by division by the basis weight of the spunbonded nonwoven fabric measured in the above (4) and by rounding one decimal place was considered as the tensile strength per basis weight (N/5 cm/(g/m$^2$)).

(12) Cast Liquid Bleed-Through Property at the Time of Forming Membrane

The back surface of manufactured polysulfone membrane was visually observed, the cast liquid bleed-through property was evaluated with the following five criteria, and levels with 4 to 5 points were evaluated as acceptable levels.

5 points: no bleed-through of cast liquid was observed.
4 points: slight bleed-through of cast liquid was observed (area ratio: 5% or less).
3 points: bleed-through of cast liquid was partially observed (area ratio: 6 to 25%).
2 points: bleed-through of cast liquid was observed (area ratio: 26 to 50%).
1 point: bleed-through of cast liquid was observed in a majority of the part (area ratio: 51% or more).

(13) Membrane Bondability

The surface of manufactured polysulfone membrane was visually observed, the bondability of the membrane was evaluated with the following five criteria, and a level with 5 points was evaluated as an acceptable level.

5 points: no peel-off of membrane was observed.
4 points: slight peel-off of membrane was observed (area ratio: 5% or less).
3 points: peel-off of membrane was partially observed (area ratio: 6 to 25%).
2 points: peel-off of membrane was observed (area ratio: 26 to 50%).
1 point: peel-off of membrane was observed in a majority of the part (area ratio: 51% or more).

(14) Peeling Strength of Membrane (N/5 cm)

Five test pieces which each have a size of 50 mm $\times$ 200 mm and in which the machine direction was the long side direction were taken per 1 m at equal intervals along a width direction from a separation membrane support in which a polysulfone membrane was formed. At one end of the test piece, the polysulfone layer was peeled away from the separation membrane support. The polysulfone layer was fixed to one grip of a constant speed elongation type tensile testing machine, and the separation membrane support was fixed to the other grip. The strength was measured at a grip distance of 100 mm and a tensile rate of 20 mm/minute. The maximum value of the strength of each of the test pieces was read, and all the maximum values were averaged. A value obtained by rounding to one decimal place was taken as the peeling strength of the separation membrane.

When the polysulfone membrane was bonded extremely firmly, it was difficult to peel off the polysulfone membrane from the separation membrane support to prepare a test piece, or when the peeling strength exceeds 3.0 N/5 cm, it was difficult to perform quantitative evaluation due to damage of the membrane during measurement. In such a case, in Table 1, the peeling strength is indicated as ">3.0".

[Example 1]

(Core Component)

A polyethylene terephthalate resin that had been dried to a water content of 50 ppm or less and had an intrinsic viscosity (IV) of 0.65, a melting point of 260°C, and a titanium oxide content of 0.3% by mass was used as a core component.

(Sheath Component)

A copolymerized polyethylene terephthalate resin that had been dried to a water content of 50 ppm or less and had an intrinsic viscosity (IV) of 0.66, an isophthalic acid copolymerization ratio of 11% by mole, a melting point of 230°C, and a titanium oxide content of 0.2% by mass was used as a sheath component.

(Spinning and Collection of Nonwoven Web)

The core component and the sheath component were melted at temperatures of 295°C and 270°C, respectively, to form a conjugate in a concentric core-sheath type (cross-section: circular shape) to perform spinning from a round pore with φ 0.3 mm under a condition of a spinneret temperature of 300°C with a mass ratio of the core component and the sheath component of 80/20, followed by spinning at a spinning rate of 4300 m/min by an ejector, and the fibers were collected on a moving net conveyer to obtain a nonwoven web having an average single fiber fineness of 1.2 dtex.

(First Thermocompression Bonding)

The collected nonwoven web was passed between a pair of upper and lower metal flat rolls and thermocompression bonded at each flat roll surface temperature of 150°C and a line pressure of 490 N/cm, and a spunbonded nonwoven fabric having a movable amorphous content of 43% was obtained.

(Second Thermocompression Bonding)

The spunbonded nonwoven fabric obtained by the first thermocompression bonding was passed between a pair of upper and lower metal flat rolls and thermocompression bonded at a flat roll surface temperature of 195°C and a line pressure of 490 N/cm, thus obtaining a spunbonded nonwoven fabric having an apparent single fiber fineness of 1.2 dtex, a basis weight of 72 g/m$^2$, a thickness of 0.12 mm, an apparent density of 0.60 g/cm$^3$, a movable amorphous content of 41%, an air permeability of 9.3 cc/cm$^2$·sec, and a Bekk smoothness of 5.2 seconds.

(Formation of Separation Membrane)

The obtained spunbonded nonwoven fabric (having a width of 50 cm and a length of 10 m) was wound off at a speed of 12 m/min. On the spunbonded nonwoven fabric, a solution (cast liquid) of 16% by mass polysulfone ("Udel" (registered trademark) P3500 manufactured by Solvay Advanced Polymers) in dimethylformamide was cast at room temperature (20°C) so as to give a thickness of 45 um. The spunbonded nonwoven fabric with the cast liquid was immediately immersed in pure water at room temperature (20°C) for 10 seconds, next immersed in pure water at a temperature of 75°C for 120 seconds, subsequently immersed in pure water at a temperature of 90°C for 120 seconds, and then wound up at a tension of 100 N/full-width, thus yielding a polysulfone membrane. At that time, a bleed-through of the cast liquid was slightly observed, bending of the membrane was not observed during winding off and winding up, no peel-off of the membrane was observed, and the membrane formability was good. The peeling strength was not measurable because the polysulfone membrane was broken during the test, and the membrane was firmly bonded. Table 1 shows results.

[Example 2]

(Spunbonded Nonwoven Fabric)

In the same manner as in Example 1 except that the basis weight of the spunbonded nonwoven fabric was 50 g/m$^2$, a spunbonded nonwoven fabric having an apparent single fiber fineness of 1.2 dtex, a basis weight of 50 g/m$^2$, a thickness of 0.09 mm, an apparent density of 0.57 g/cm$^3$, a movable amorphous content of 41%, an air permeability of 21.8 cc/cm$^2$·sec, and Bekk smoothness of both surfaces of 11.9 seconds was obtained.

(Formation of Separation Membrane)

On the obtained spunbonded nonwoven fabric, a polysulfone membrane was formed in the same manner as in Example 1. At that time, a bleed-through of the cast liquid was slightly observed, bending of the membrane was not observed during winding off and winding up, no peel-off of the membrane was observed, and the membrane formability was good. The peeling strength of the obtained polysulfone membrane was 2.7 N/5 cm. Table 1 shows results.

[Example 3]

(Spunbonded Nonwoven Fabric)

In the same manner as in Example 1 except that the basis weight of the spunbonded nonwoven fabric was 100 g/m$^2$, a spunbonded nonwoven fabric having an apparent single fiber fineness of 1.2 dtex, a basis weight of 100 g/m$^2$, a thickness of 0.14 mm, an apparent density of 0.70 g/cm$^3$, a movable amorphous content of 41%, an air permeability of 4.6 cc/cm$^2$·sec, and a Bekk smoothness of 4.8 seconds was obtained.

(Formation of Separation Membrane)

On the obtained spunbonded nonwoven fabric, a polysulfone membrane was formed in the same manner as in Example 1. At that time, no bleed-through of the cast liquid was observed, bending of the membrane was not observed during winding off and winding up, peel-off of the membrane was not observed, and the membrane formability was good. The peeling strength was not measurable because the polysulfone membrane was broken during the test, and the membrane was firmly bonded. Table 1 shows results.

[Example 4]

(Spunbonded Nonwoven Fabric)

In the same manner as in Example 1 except that the surface temperature of the pair of upper and lower metal flat rolls in the first thermocompression bonding was 140°C, and the movable amorphous content of the spunbonded nonwoven fabric after the first thermocompression bonding was 54%, a spunbonded nonwoven fabric having an apparent single fiber fineness of 1.2 dtex, a basis weight of 72 g/m$^2$, a thickness of 0.12 mm, an apparent density of 0.60 g/cm$^3$, a movable amorphous content of 43%, an air permeability of 11.3 cc/cm$^2$·sec, and a Bekk smoothness of 8.3 seconds was obtained. Table 1 shows results.

(Formation of Separation Membrane)

On the obtained spunbonded nonwoven fabric, a polysulfone membrane was formed in the same manner as in Example 1. At that time, a bleed-through of the cast liquid was slightly observed, bending of the membrane was not observed during winding off and winding up, no peel-off of the membrane was observed, and the membrane formability was good. The peeling strength of the obtained polysulfone membrane was 2.5 N/5 cm. Table 1 shows results.

[Example 5]

(Spunbonded Nonwoven Fabric)

In the same manner as in Example 1 except that the surface temperature of the pair of upper and lower metal flat rolls in the second thermocompression bonding was 210°C, a spunbonded nonwoven fabric having an apparent single fiber fineness of 1.2 dtex, a basis weight of 72 g/m$^2$, a thickness of 0.11 mm, an apparent density of 0.63 g/cm$^3$, a movable amorphous content of 39%, an air permeability of 9.0 cc/cm$^2$·sec, and a Bekk smoothness of 5.2 seconds was obtained.

(Formation of Separation Membrane)

On the obtained spunbonded nonwoven fabric, a polysulfone membrane was formed in the same manner as in Example 1. At that time, a bleed-through of the cast liquid was slightly observed, bending of the membrane was not observed during winding off and winding up, no peel-off of the membrane was observed, and the membrane formability was good. The peeling strength was not measurable because the polysulfone membrane was broken during the test, and the membrane was firmly bonded. Table 1 shows results.

[Example 6]

(Spunbonded Nonwoven Fabric)

In the same manner as in Example 1 except that the component ratio of a copolymerized polyethylene terephthalate resin of the sheath component was 40%, and the movable amorphous content of the spunbonded nonwoven fabric after the first thermocompression bonding was 45%, a spunbonded nonwoven fabric having an apparent single fiber fineness of 1.2 dtex, a basis weight of 72 g/m$^2$, a thickness of 0.11 mm, an apparent density of 0.65 g/cm$^3$, a movable amorphous content of 42%, an air permeability of 8.7 cc/cm$^2$·sec, and a Bekk smoothness of 5.6 seconds was obtained.

(Formation of Separation Membrane)

On the obtained spunbonded nonwoven fabric, a polysulfone membrane was formed in the same manner as in Example 1. At that time, a bleed-through of the cast liquid was slightly observed, bending of the membrane was not observed during winding off and winding up, no peel-off of the membrane was observed, and the membrane formability was good. The peeling strength was not measurable because the polysulfone membrane was broken during the test, and the membrane was firmly bonded. Table 1 shows results.

[Table 1]

| | | | | Example 1 | Example 2 | Example 3 | Example 4 | Example 5 | Example 6 |
|---|---|---|---|---|---|---|---|---|---|
| Nonwoven fabric | Types of nonwoven fabric | | | SB | SB | SB | SB | SB | SB |
| | Fiber composition | Core component | Type of resin | PET | PET | PET | PET | PET | PET |
| | | | Melting point (°C) | 260 | 260 | 260 | 260 | 260 | 260 |
| | | Sheath component | Type of resin | co-PET | co-PET | co-PET | co-PET | co-PET | co-PET |
| | | | Melting point (°C) | 230 | 230 | 230 | 230 | 230 | 230 |
| | | Sheath component ratio (% by mass) | | 20 | 20 | 20 | 20 | 20 | 40 |
| | Aspect ratio of discharge orifice | | | (Round) | (Round) | (Round) | (Round) | (Round) | (Round) |
| | Spinning rate (m/min) | | | 4300 | 4300 | 4300 | 4300 | 4300 | 4300 |
| | Thermocompression bonding (First time) | Temperature (°C) | Upper roll | 150 | 150 | 150 | 140 | 150 | 150 |
| | | | Lower roll | 150 | 150 | 150 | 140 | 150 | 150 |
| | | Line pressure (N/cm) | | 490 | 490 | 490 | 490 | 490 | 490 |
| | Movable amorphous content (%) | | | 43 | 43 | 43 | 54 | 43 | 45 |
| | Thermocompression bonding (Second time) | Temperature (°C) | Upper roll | 195 | 195 | 195 | 195 | 210 | 195 |
| | | | Lower roll | 195 | 195 | 195 | 195 | 210 | 195 |
| | | Line pressure (N/cm) | | 490 | 490 | 490 | 490 | 490 | 490 |
| | Fiber flatness | | | 1.0 | 1.0 | 1.0 | 1.0 | 1.0 | 1.0 |
| | Average single fiber fineness (dtex) | | | 1.2 | 1.2 | 1.2 | 1.2 | 1.2 | 1.2 |
| | Apparent single fiber fineness (dtex) | | | 1.2 | 1.2 | 1.2 | 1.2 | 1.2 | 1.2 |
| | Basis weight (g/m$^2$) | | | 72 | 50 | 100 | 72 | 72 | 72 |

(continued)

| | | | Example 1 | Example 2 | Example 3 | Example 4 | Example 5 | Example 6 |
|---|---|---|---|---|---|---|---|---|
| | Thickness (mm) | | 0.12 | 0.09 | 0.14 | 0.12 | 0.11 | 0.11 |
| | Apparent density (g/cm$^3$) | | 0.61 | 0.57 | 0.69 | 0.60 | 0.63 | 0.65 |
| | Movable amorphous content (%) | | 41 | 41 | 41 | 43 | 39 | 42 |
| | Air permeability (cc/cm$^2$·sec) | | 9.3 | 18.4 | 4.6 | 11.3 | 9.0 | 8.7 |
| | Smoothness (sec) | | 5.2 | 11.9 | 4.8 | 8.3 | 5.2 | 5.6 |
| | Tensile strength per basis weight (N/5cm/ (g/m$^2$)) | Machine direction (MD) | 5.9 | 5.3 | 6.5 | 5.7 | 5.9 | 6.0 |
| | | Transverse direction (TD) | 2.7 | 2.7 | 2.7 | 2.6 | 2.8 | 2.8 |
| Separation membrane | Membrane forming processability | Liquid bleed-through property | 4 | 4 | 5 | 4 | 4 | 4 |
| | | Membrane bondability | 5 | 5 | 5 | 5 | 5 | 5 |
| | Membrane peeling strength (N/5 cm) | | > 3.0 | 2.7 | > 3.0 | 2.5 | > 3.0 | > 3.0 |

[Example 7]

(Core Component)

A polyethylene terephthalate resin that had been dried to a water content of 50 ppm or less and had an intrinsic viscosity (IV) of 0.65, a melting point of 260°C, and a titanium oxide content of 0.3% by mass was used as a core component.

(Sheath Component)

A copolymerized polyethylene terephthalate resin that had been dried to a water content of 50 ppm or less and had an intrinsic viscosity (IV) of 0.66, an isophthalic acid copolymerization ratio of 11% by mole, a melting point of 230°C, and a titanium oxide content of 0.2% by mass was used as a sheath component.

(Spinning and Collection of Nonwoven Web)

The core component and the sheath component were melted at temperatures of 295°C and 270°C, respectively, to form a conjugate in a concentric core-sheath type to perform spinning from a discharge orifice having a cross-sectional shape of 0.2 mm × 1.0 mm under a condition of a spinneret temperature of 300°C with a mass ratio of the core component and the sheath component of 80/20, followed by spinning at a spinning rate of 4200 m/min by an ejector, and the fibers were collected on a moving net conveyer to obtain a nonwoven web. The cross-sectional shape of the fiber of the collected nonwoven web was a flattened shape, the fiber flatness was 1.8, and the average single fiber fineness was 1.2 dtex.

(First Thermocompression Bonding)

The collected nonwoven web was passed between a pair of upper and lower metal flat rolls and thermocompression bonded at each flat roll surface temperature of 150°C and a line pressure of 490 N/cm, and a spunbonded nonwoven fabric having a movable amorphous content of 43% was obtained.

(Second Thermocompression Bonding)

The spunbonded nonwoven fabric obtained by the first thermocompression bonding was passed between a pair of upper and lower metal flat rolls and thermocompression bonded at a flat roll surface temperature of 195°C and a line pressure of 490 N/cm, thus obtaining a spunbonded nonwoven fabric having an apparent single fiber fineness of 2.2 dtex, a basis weight of 72 g/m$^2$, a thickness of 0.11 mm, an apparent density of 0.64 g/cm$^3$, a movable amorphous content of 41%, an air permeability of 5.8 cc/cm$^2$·sec, and a Bekk smoothness of 10.2 seconds.

(Formation of Separation Membrane)

On the obtained spunbonded nonwoven fabric, a polysulfone membrane was formed in the same manner as in Example 1. At that time, no bleed-through of the cast liquid was observed, bending of the membrane was not observed during winding off and winding up, peel-off of the membrane was not observed, and the membrane formability was good. The peeling strength was not measurable because the polysulfone membrane was broken during the test, and the membrane was firmly bonded. Table 2 shows results.

[Example 8]

(Spunbonded Nonwoven Fabric)

A spunbonded nonwoven fabric was produced in the same manner as in Example 7 except that the basis weight was 50 g/m$^2$. The obtained spunbonded nonwoven fabric had an apparent single fiber fineness of 2.2 dtex, a thickness of 0.09 mm, an apparent density of 0.59 g/cm$^3$, a movable amorphous content of 41%, an air permeability of 13.3 cc/cm$^2$·sec, and a Bekk smoothness of 15.6 seconds.

(Formation of Separation Membrane)

On the obtained spunbonded nonwoven fabric, a polysulfone membrane was formed in the same manner as in Example 7. At that time, no bleed-through of the cast liquid was observed, bending of the membrane was not observed during winding off and winding up, peel-off of the membrane was not observed, and the membrane formability was good. The peeling strength was not measurable because the polysulfone membrane was broken during the test, and the membrane was firmly bonded. Table 2 shows results.

[Example 9]

(Spunbonded Nonwoven Fabric)

A spunbonded nonwoven fabric was produced in the same manner as in Example 1 except that the basis weight was 100 g/m$^2$. The obtained spunbonded nonwoven fabric had an apparent single fiber fineness of 2.2 dtex, a thickness of 0.13 mm, an apparent density of 0.77 g/cm$^3$, a movable amorphous content of 41%, an air permeability of 2.9 cc/cm$^2$·sec, and a Bekk smoothness of 9.4 seconds.

(Formation of Separation Membrane)

On the obtained spunbonded nonwoven fabric, a polysulfone membrane was formed in the same manner as in Example 1. At that time, no bleed-through of the cast liquid was observed, bending of the membrane was not observed during winding off and winding up, peel-off of the membrane was not observed, and the membrane formability was good. The peeling strength was not measurable because the polysulfone membrane was broken during the test, and the membrane was firmly bonded. Table 2 shows results.

[Example 10]

(Spunbonded Nonwoven Fabric)

A spunbonded nonwoven fabric was produced in the same manner as in Example 1 except that the surface temperature of the pair of upper and lower metal flat rolls in the first thermocompression bonding was 140°C, and the movable amorphous content of the spunbonded nonwoven fabric after the first thermocompression bonding was 54%. The obtained spunbonded nonwoven fabric had an apparent single fiber fineness of 2.2 dtex, a basis weight of 72 g/m$^2$, a thickness of 0.11 mm, an apparent density of 0.65 g/cm$^3$, a movable amorphous content of 43%, an air permeability of 7.7 cc/cm$^2$·sec, and a Bekk smoothness of 14.0 seconds. Table 2 shows results.

(Formation of Separation Membrane)

On the obtained spunbonded nonwoven fabric, a polysulfone membrane was formed in the same manner as in Example 1. At that time, no bleed-through of the cast liquid was observed, bending of the membrane was not observed during winding off and winding up, peel-off of the membrane was not observed, and the membrane formability was good. The peeling strength was not measurable because the polysulfone membrane was broken during the test, and the membrane was firmly bonded. Table 2 shows results.

[Example 11]

(Spunbonded Nonwoven Fabric)

A spunbonded nonwoven fabric was produced in the same manner as in Example 1 except that the discharge rate at the time of spinning was adjusted, the spinning rate was 4300 m/min, the fiber flatness of the nonwoven web collected on a net conveyor was 2.2, the average single fiber fineness was 2.0 dtex, and the movable amorphous content of the spunbonded nonwoven fabric after the first thermocompression bonding was 41%. The obtained spunbonded nonwoven fabric had an apparent single fiber fineness of 4.5 dtex, a basis weight of 72 g/m$^2$, a thickness of 0.11 mm, an apparent density of 0.64 g/cm$^3$, a movable amorphous content of 39%, an air permeability of 4.4 cc/cm$^2$·sec, and a Bekk smoothness of 16.9 seconds.

(Formation of Separation Membrane)

On the obtained spunbonded nonwoven fabric, a polysulfone membrane was formed in the same manner as in Example 1. At that time, no bleed-through of the cast liquid was observed, bending of the membrane was not observed during winding off and winding up, peel-off of the membrane was not observed, and the membrane formability was good.

The peeling strength was not measurable because the polysulfone membrane was broken during the test, and the membrane was firmly bonded. Table 2 shows results.

[Example 12]

A spunbonded nonwoven fabric was produced in the same manner as in Example 1 except that the discharge rate at the time of spinning was adjusted, spinning was performed from a discharge orifice having a cross-sectional shape of 0.2 mm $\times$ 0.35 mm, the spinning rate was 4300 m/min, the fiber flatness was 1.5, and the average single fiber fineness was 1.3 dtex. The obtained spunbonded nonwoven fabric had an apparent single fiber fineness of 2.1 dtex, a basis weight of 72 g/m$^2$, a thickness of 0.11 mm, an apparent density of 0.63 g/cm$^3$, a movable amorphous content of 41%, an air permeability of 8.8 cc/cm$^2$·sec, and a Bekk smoothness of 7.8 seconds.

(Formation of Separation Membrane)

On the obtained spunbonded nonwoven fabric, a polysulfone membrane was formed in the same manner as in Example 1. At that time, no bleed-through of the cast liquid was observed, bending of the membrane was not observed during winding off and winding up, peel-off of the membrane was not observed, and the membrane formability was good. The peeling strength was not measurable because the polysulfone membrane was broken during the test, and the membrane was firmly bonded. Table 2 shows results.

[Table 2]

| | | | | Example 7 | Example 8 | Example 9 | Example 10 | Example 11 | Example 12 |
|---|---|---|---|---|---|---|---|---|---|
| Nonwoven fabric | Types of nonwoven fabric | | | SB | SB | SB | SB | SB | SB |
| | Fiber composition | Core component | Type of resin | PET | PET | PET | PET | PET | PET |
| | | | Melting point (°C) | 260 | 260 | 260 | 260 | 260 | 260 |
| | | Sheath component | Type of resin | co-PET | co-PET | co-PET | co-PET | co-PET | co-PET |
| | | | Melting point (°C) | 230 | 230 | 230 | 230 | 230 | 230 |
| | | Sheath component ratio (% by mass) | | 20 | 20 | 20 | 20 | 20 | 20 |
| | Aspect ratio of discharge orifice | | | 5.0 | 5.0 | 5.0 | 5.0 | 5.0 | 1.75 |
| | Spinning rate (m/min) | | | 4200 | 4200 | 4200 | 4200 | 4300 | 4300 |
| | Thermocompression bonding (First time) | Temperature (°C) | Upper roll | 150 | 150 | 150 | 140 | 150 | 150 |
| | | | Lower roll | 150 | 150 | 150 | 140 | 150 | 150 |
| | | Line pressure (N/cm) | | 490 | 490 | 490 | 490 | 490 | 490 |
| | Movable amorphous content (%) | | | 43 | 43 | 43 | 54 | 41 | 43 |
| | Thermocompression bonding (Second time) | Temperature (°C) | Upper roll | 195 | 195 | 195 | 195 | 195 | 195 |
| | | | Lower roll | 195 | 195 | 195 | 195 | 195 | 195 |
| | | Line pressure (N/cm) | | 490 | 490 | 490 | 490 | 490 | 490 |
| | Fiber flatness | | | 1.8 | 1.8 | 1.8 | 1.8 | 2.2 | 1.5 |
| | Average single fiber fineness (dtex) | | | 1.2 | 1.2 | 1.2 | 1.2 | 2.0 | 1.3 |

(continued)

| | | | Example 7 | Example 8 | Example 9 | Example 10 | Example 11 | Example 12 |
|---|---|---|---|---|---|---|---|---|
| | Apparent single fiber fineness (dtex) | | 2.2 | 2.2 | 2.2 | 2.2 | 4.5 | 2.1 | |
| | Basis weight (g/m$^2$) | | 72 | 50 | 100 | 72 | 72 | 72 | |
| | Thickness (mm) | | 0.11 | 0.09 | 0.13 | 0.11 | 0.11 | 0.11 | |
| | Apparent density (g/cm$^3$) | | 0.64 | 0.59 | 0.77 | 0.65 | 0.64 | 0.63 | |
| | Movable amorphous content (t) | | 41 | 41 | 41 | 43 | 39 | 41 | |
| | Air permeability (cc/cm$^2$·sec) | | 5.8 | 13.3 | 2.9 | 7.7 | 4.4 | 8.8 | |
| | Bekk smoothness (sec) | | 10.2 | 15.6 | 9.4 | 14.0 | 16.9 | 7.8 | |
| | Tensile strength (N/5 cm) | Machine direction (MD) | 5.9 | 5.2 | 6.3 | 5.7 | 5.6 | 5.8 | |
| | | Transverse direction (TD) | 2.7 | 2.6 | 2.5 | 2.6 | 2.5 | 2.8 | |
| Separation membrane | Membrane forming processability | Liquid bleed-through property | 5 | 5 | 5 | 5 | 5 | 5 | |
| | | Membrane bondability | 5 | 5 | 5 | 5 | 5 | 5 | |
| | Membrane peeling strength (cN) | | > 3.0 | > 3.0 | > 3.0 | > 3.0 | > 3.0 | > 3.0 | |

EP 3 508 639 B1

[Comparative Example 1]

(Spunbonded Nonwoven Fabric)

In the same manner as in Example 1 except that the surface temperature of the pair of upper and lower metal flat rolls in the first thermocompression bonding was 130°C, and the movable amorphous content of the spunbonded nonwoven fabric after the first thermocompression bonding was 58%, a spunbonded nonwoven fabric having an apparent single fiber fineness of 1.2 dtex, a basis weight of 72 g/m$^2$, a thickness of 0.10 mm, an apparent density of 0.71 g/cm$^3$, a movable amorphous content of 44%, an air permeability of 6.7 cc/cm$^2$·sec, and a Bekk smoothness of 10.6 seconds was obtained. A portion of the surface of the obtained spunbonded nonwoven fabric was film-like.

(Formation of Separation Membrane)

On the obtained spunbonded nonwoven fabric, a polysulfone membrane was formed in the same manner as in Example 1. At that time, a bleed-through of the cast liquid was slightly observed, and bending of the membrane was not observed during winding off and winding up; however, peel-off of the polysulfone membrane partially occurred, and it was difficult to use as a separation membrane support. The peeling strength of the polysulfone membrane was measured at a portion where peel-off was not visually observed, so that the peeling strength was 0.9 N/5 cm. Table 3 shows results.

[Comparative Example 2]

(Spunbonded Nonwoven Fabric)

In the same manner as in Example 1 except that the surface temperature of the pair of upper and lower metal flat rolls in the first thermocompression bonding was 170°C, and the movable amorphous content of the spunbonded nonwoven fabric after the first thermocompression bonding was 39%, a spunbonded nonwoven fabric having an apparent single fiber fineness of 1.2 dtex, a basis weight of 72 g/m$^2$, a thickness of 0.10 mm, an apparent density of 0.72 g/cm$^3$, a movable amorphous content of 37%, an air permeability of 4.9 cc/cm$^2$·sec, and a Bekk smoothness of 18.4 seconds was obtained. A portion of the surface of the obtained spunbonded nonwoven fabric was film-like when the spunbonded nonwoven fabric was subjected to the first thermocompression bonding.

(Formation of Separation Membrane)

On the obtained spunbonded nonwoven fabric, a polysulfone membrane was formed in the same manner as in Example 1. At that time, no bleed-through of the cast liquid was observed, and bending of the membrane was not observed during winding off and winding up; however, peel-off of the polysulfone membrane occurred, and it was difficult to use as a separation membrane support. The peeling strength of the polysulfone membrane was measured at a portion where peel-off was not visually observed, so that the peeling strength was 0.7 N/5 cm. Table 3 shows results.

[Comparative Example 3]

(Spunbonded Nonwoven Fabric)

While performing up to the first thermocompression bonding, a spunbonded nonwoven fabric with a movable amorphous content of 54% was obtained in the same manner as in Comparative Example 1 except that the basis weight of the spunbonded nonwoven fabric was 36 g/m$^2$.

Subsequently, two spunbonded nonwoven fabrics obtained were superimposed with each other. A set of three flat rolls including an upper resin elastic roll having a hardness (Shore D) of 91, a middle metal roll, and a lower resin elastic roll having a hardness (Shore D) of 75 was used, and the nonwoven fabric laminate was passed between the middle roll and the lower roll and thereby thermocompression bonded. The nonwoven fabric laminate was turned and then passed between the upper roll and the middle roll and thereby thermocompression bonded. At this time, as for the surface temperatures of three flat rolls, the upper roll had a surface temperature of 130°C, the middle roll had a surface temperature of 190°C, and the lower roll had a surface temperature of 140°C. The line pressure was 1862 N/cm. The obtained spunbonded nonwoven fabric had an apparent single fiber fineness of 1.3 dtex, a basis weight of 72 g/m$^2$, a thickness of 0.08 mm, an apparent density of 0.90 g/cm$^3$, a movable amorphous content of 30%, and an air permeability of 0.8 cc/cm$^2$·sec. The Bekk smoothness of the front surface was 35.0 seconds, and the Bekk smoothness of the back surface was 12.2 seconds. On the surface having come into contact with the metal roll side in the second thermocompression bonding, fusion between fibers was large, and the boundary was unclear; therefore, the apparent single fiber fineness was measured on the surface on the resin roll side.

(Formation of Separation Membrane)

On the obtained spunbonded nonwoven fabric, a polysulfone membrane was formed in the same manner as in Example 1 such that the surface having a Beck smoothness of 35.0 seconds was used as a membrane forming surface. At this time, although no bleed-through of the cast liquid was observed, bending or rolling of the membrane was partially observed during winding off and winding up, and processing loss occurred. In addition, peel-off of the polysulfone membrane occurred slightly. The peeling strength of the polysulfone membrane was measured at a portion where peel-off was not visually observed, so that the peeling strength was 1.5 N/5 cm. Table 3 shows results.

[Comparative Example 4]

(Raw Material)

A polyethylene terephthalate resin that had been dried to a water content of 50 ppm or less and had an intrinsic viscosity (IV) of 0.65, a melting point of 260°C, and a titanium oxide content of 0.3% by mass was used as a raw material. No sheath component was used, and a single component was used.

(Spinning and Collection of Nonwoven Web)

The above raw material was melted at a temperature of 295°C to perform spinning from a pore under a condition of a spinneret temperature of 300°C, followed by spinning at a spinning rate of 4500 m/min by an ejector, and the fibers were collected on a moving net conveyer to obtain a nonwoven web.

(First Thermocompression Bonding)

The collected nonwoven web was passed between a pair of upper and lower metal flat rolls and thermocompression bonded at a flat roll surface temperature of 180°C and a line pressure of 490 N/cm, and a spunbonded nonwoven fabric having a movable amorphous content of 46% was obtained.

(Second Thermocompression Bonding)

The spunbonded nonwoven fabric obtained by the first thermocompression bonding was passed between a pair of upper and lower metal flat rolls and thermocompression bonded at a flat roll surface temperature of 230°C and a line pressure of 490 N/cm, thus obtaining a spunbonded nonwoven fabric having an apparent fineness of 1.2 dtex, a basis weight of 72 g/m$^2$, a thickness of 0.13 mm, an apparent density of 0.54 g/cm$^3$, a movable amorphous content of 43%, an air permeability of 13.1 cc/cm$^2$·sec, and a Bekk smoothness of 4.2 seconds.

(Formation of Separation Membrane)

On the obtained spunbonded nonwoven fabric, a polysulfone membrane was formed in the same manner as in Example 1. At that time, no bending of the membrane was observed during winding off and winding up, and no peel-off of the polysulfone membrane was observed. However, a bleed-through of the cast liquid partially occurred, and this causes membrane defects during winding up, so that it was difficult to use as a separation membrane support. The peeling strength was not measurable because the polysulfone membrane was broken during the test, and the membrane was firmly bonded. Table 3 shows results.

[Comparative Example 5]

(Spunbonded Nonwoven Fabric)

A spunbonded nonwoven fabric was produced in the same manner as in Example 7 except that the surface temperature of the pair of upper and lower metal flat rolls in the first thermocompression bonding was 130°C, and the movable amorphous content of the spunbonded nonwoven fabric after the first thermocompression bonding was 59%. The obtained spunbonded nonwoven fabric had an apparent single fiber fineness of 2.3 dtex, a basis weight of 72 g/m$^2$, a thickness of 0.09 mm, an apparent density of 0.76 g/cm$^3$, a movable amorphous content of 44%, an air permeability of 3.6 cc/cm$^2$·sec, and a Bekk smoothness of 18.2 seconds. A portion of the surface of the obtained spunbonded nonwoven fabric was film-like.

(Formation of Separation Membrane)

On the obtained spunbonded nonwoven fabric, a polysulfone membrane was formed in the same manner as in Example 1. At that time, no bleed-through of the cast liquid was observed, and the bending of the membrane was not observed during winding off and winding up; however, peel-off of the polysulfone membrane partially occurred, and it was difficult to use as a separation membrane support. The peeling strength of the polysulfone membrane was measured at a portion where peel-off was not visually observed, so that the peeling strength was 0.8 cN/15 mm. Table 3 shows results.

[Comparative Example 6]

(Spunbonded Nonwoven Fabric)

A spunbonded nonwoven fabric was produced in the same manner as in Example 7 except that the surface temperature of the pair of upper and lower metal flat rolls in the first thermocompression bonding was 170°C, and the movable amorphous content of the spunbonded nonwoven fabric after the first thermocompression bonding was 41%. The obtained spunbonded nonwoven fabric had an apparent single fiber fineness of 2.3 dtex, a basis weight of 72 g/m$^2$, a thickness of 0.10 mm, an apparent density of 0.76 g/cm$^3$, a movable amorphous content of 38%, an air permeability of 2.9 cc/cm$^2$·sec, and a Bekk smoothness of 25.3 seconds. A portion of the surface of the obtained spunbonded nonwoven fabric was film-like when the spunbonded nonwoven fabric was subjected to the first thermocompression bonding.

(Formation of Separation Membrane)

On the obtained spunbonded nonwoven fabric, a polysulfone membrane was formed in the same manner as in Example 1. At that time, no bleed-through of the cast liquid was observed, and the bending of the membrane was not observed during winding off and winding up; however, peel-off of the polysulfone membrane occurred, and it was difficult to use as a separation membrane support. The peeling strength of the polysulfone membrane was measured at a portion where peel-off was not visually observed, so that the peeling strength was 0.6 cN/15 mm. Table 3 shows results.

[Table 3]

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| Nonwoven fabric | Types of nonwoven fabric | | | SB | SB | SB | SB | SB | SB |
| | Fiber composition | Core component | Type of resin | PET | PET | PET | PET | PET | PET |
| | | | Melting point (°C) | 260 | 260 | 260 | 260 | 260 | 260 |
| | | Sheath component | Type of resin | co-PET | co-PET | co-PET | - | co-PET | co-PET |
| | | | Melting point (°C) | 230 | 230 | 230 | - | 230 | 230 |
| | | Sheath component ratio (% by mass) | | 20 | 20 | 20 | 20 | 20 | 20 |
| | Aspect ratio of discharge orifice | | | (Round) | (Round) | (Round) | (Round) | 5.0 | 5.0 |
| | Spinning rate (m/min) | | | 4300 | 4300 | 4300 | 4500 | 4200 | 4200 |
| | Thermocompression bonding (First time) | Temperature (°C) | Upper roll | 130 | 170 | 130 | 180 | 130 | 170 |
| | | | Lower roll | 130 | 170 | 130 | 180 | 130 | 170 |
| | | Line pressure (N/cm) | | 490 | 490 | 490 | 490 | 490 | 490 |
| | Movable amorphous content (%) | | | 58 | 39 | 54 | 46 | 59 | 41 |
| | Thermocompression bonding (Second time) | Temperature (°C) | Upper roll | 195 | 195 | 195 | 230 | 195 | 195 |
| | | | Lower roll | 195 | 195 | 140 | 230 | 195 | 195 |
| | | Line pressure (N/cm) | | 490 | 490 | 1862 | 490 | 490 | 490 |

EP 3 508 639 B1

| | | | Comparative Example 1 | Comparative Example 2 | Comparative Example 3 | Comparative Example 4 | Comparative Example 5 | Comparative Example 6 |
|---|---|---|---|---|---|---|---|---|
| | | Fiber flatness | 1.0 | 1.0 | 1.0 | 1.0 | 1.8 | 1.8 |
| | | Average single fiber fineness (dtex) | 1.2 | 1.2 | 1.2 | 1.2 | 1.2 | 1.2 |
| | | Apparent single fiber fineness (dtex) | 1.2 | 1.2 | 1.3 | 1.2 | 2.3 | 2.3 |
| | | Basis weight (g/m$^2$) | 72 | 72 | 72 | 72 | 72 | 72 |
| | | Thickness (mm) | 0.10 | 0.10 | 0.08 | 0.13 | 0.09 | 0.10 |
| | | Apparent density (g/cm$^3$) | 0.71 | 0.72 | 0.90 | 0.54 | 0.76 | 0.76 |
| | | Movable amorphous content (%) | 44 | 37 | 30 | 43 | 44 | 38 |
| | | Air permeability (cc/cm$^2$·sec) | 6.7 | 4.9 | 0.8 | 13.1 | 3.6 | 2.9 |
| | | Bekk smoothness (sec) | 10.6 | 18.4 | 35.0/12.2 | 4.2 | 18.2 | 25.3 |
| | Tensile strength (N/5 cm) | Machine direction (MD) | 5.6 | 6.2 | 5.9 | 5.0 | 5.6 | 6.0 |
| | | Transverse direction (TD) | 2.5 | 2.7 | 2.9 | 2.3 | 2.5 | 2.6 |
| Separation membrane | Membrane forming processability | Liquid bleed-through property | 4 | 5 | 5 | 3 | 5 | 5 |
| | | Membrane bondability | 3 | 2 | 4 | 5 | 3 | 2 |
| | | Membrane peeling strength (cN) | 0.9 | 0.7 | 1.5 | > 3.0 | 0.8 | 0.6 |

EP 3 508 639 B1

<Summary>

As shown in Table 1, the spunbonded nonwoven fabrics of Examples 1 to 6 in which the apparent single fiber fineness was 0.5 dtex or more and less than 2 dtex, the apparent density was 0.50 to 0.70 g/cm$^3$, and the air permeability satisfied [formula 1] had good membrane formability and excellent membrane bondability and peeling strength and were suitable as separation membrane supports.

On the other hand, as shown in Table 3, in the spunbonded nonwoven fabrics of Comparative Examples 1 and 2 whose surfaces became film-like and which had a lower air permeability than that of the above [formula 1], the polysulfone membrane was peeled in the membrane forming step, and it was difficult to use as separation membrane supports. The spunbonded nonwoven fabric of Comparative Example 3 which was thermocompression bonded by a metal roll and an elastic roll and had a high density and a remarkably low air permeability had problems in the passability in the membrane forming step, and the peeling strength of the polysulfone membrane was low. In the spunbonded nonwoven fabric of Comparative Example 4 which was formed of a single component polyester resin and had a higher air permeability than that of the above [formula 1], membrane defects due to bleed-through of the cast solution occurred, and it was difficult to use as a separation membrane support.

As shown in Table 2, the spunbonded nonwoven fabrics of Examples 7 to 12 in which the apparent single fiber fineness was 2 dtex or more and 10 dtex or less, the apparent density was 0.50 to 0.80 g/cm$^3$, and the air permeability satisfied [formula 2] had good membrane formability and excellent membrane bondability and peeling strength and were suitable as separation membrane supports.

On the other hand, as shown in Table 3, in the spunbonded nonwoven fabrics of Comparative Examples 5 and 6 whose surfaces became partially film-like and which had a lower air permeability than that of [formula 2], the membrane was peeled, and they were insufficient as separation membrane supports.

**Claims**

1.  A spunbonded nonwoven fabric comprising thermoplastic fibers, wherein the thermoplastic fiber is a conjugate fiber in which a low-melting polymer having a melting point lower by 10 to 140°C than that of a high-melting polymer is provided around the high-melting polymer, an apparent single fiber fineness of the conjugate fiber as viewed from the surface of the spunbonded nonwoven fabric is 0.5 dtex or more and 10 dtex or less, when the apparent single fiber fineness of the conjugate fiber is 0.5 dtex or more and less than 2 dtex, an apparent density is 0.50 to 0.70 g/cm$^3$, and air permeability satisfies [formula 1] described below, and when the apparent single fiber fineness of the conjugate fiber is 2 dtex or more and 10 dtex or less, the apparent density is 0.50 to 0.80 g/cm$^3$, and the air permeability satisfies [formula 2] described below,

    . $3.8 \times 10^4 \times$ [basis weight (g/m$^2$)]$^{-2}$ ≤ [air permeablity (cc/cm$^2$·sec)] ≤ $6.0 \times 10^4 \times$ [basis weight (g/m$^2$))$^{-2}$

    , and

    . $2.2 \times 10^4 \times$ [basis weight (g/m$^2$)]$^{-2}$ ≤ [air permeablity (cc/cm$^2$·sec)] ≤ $4.6 \times 10^4 \times$ [basis weight (g/m$^2$))$^{-2}$

    , wherein the apparent single fiber fineness of the conjugate fiber, the apparent density of the spunbonded nonwoven fabric and the air permeability of the spunbond nonwoven fabric are measured according to the methods disclosed in the description, and
    wherein the spunbonded nonwoven fabric is produced by a production method comprising the following steps (a) to (d) sequentially in this order:

    (a) spinning, from a spinneret, a conjugate fiber in which a low-melting polymer having a melting point lower by 10 to 140°C than that of a high-melting polymer is provided around the high-melting polymer,
    (b) stretching the spun conjugate fibers by suction flow using a high-speed suction gas and collecting the fibers on a moving net conveyor to form the collected fibers into a nonwoven web,
    (c) thermally bonding the obtained nonwoven web with a pair of upper and lower flat rolls at a temperature lower by 65 to 95°C than the melting point of the low-melting polymer, and
    (d) subsequently thermally bonding with the pair of upper and lower flat rolls at a temperature lower by 5 to 60°C than the melting point of the low-melting polymer.

2.  The spunbonded nonwoven fabric according to claim 1, wherein the apparent single fiber fineness of the conjugate fiber as viewed from the surface of the spunbonded nonwoven fabric is 0.5 dtex or more and less than 2 dtex, and a Bekk smoothness of at least one surface of the spunbonded nonwoven fabric is 1 to 10 seconds,
wherein the Bekk smoothness is measured according to the method disclosed in the description.

3. The spunbonded nonwoven fabric according to claim 1, wherein the apparent single fiber fineness of the conjugate fiber as viewed from the surface of the spunbonded nonwoven fabric is 2 dtex or more and 10 dtex or less, and a Bekk smoothness of at least one surface of the spunbonded nonwoven fabric is 3 to 20 seconds, wherein the Bekk smoothness is measured according to the method disclosed in the description.

4. The spunbonded nonwoven fabric according to any one of claims 1 to 3, wherein the basis weight of the spunbonded nonwoven fabric is 10 to 150 g/m$^2$.

5. The spunbonded nonwoven fabric according to any one of claims 1 to 4, wherein the thermoplastic fiber is a polyester fiber.

6. The spunbonded nonwoven fabric according to any one of claims 1 to 5, wherein the thermoplastic fiber has a movable amorphous content of 35 to 50%, wherein the movable amorphous content is measured according to the method disclosed in the description.

7. A separation membrane support comprising the spunbonded nonwoven fabric according to any one of claims 1 to 6.

8. A production method for a spunbonded nonwoven fabric as claimed in claim 1, the production method comprising the following steps (a) to (d) sequentially in this order:

(a) spinning, from a spinneret, a conjugate fiber in which a low-melting polymer having a melting point lower by 10 to 140°C than that of a high-melting polymer is provided around the high-melting polymer,
(b) stretching the spun conjugate fibers by suction flow using a high-speed suction gas and collecting the fibers on a moving net conveyor to form the collected fibers into a nonwoven web,
(c) thermally bonding the obtained nonwoven web with a pair of upper and lower flat rolls at a temperature lower by 65 to 95°C than the melting point of the low-melting polymer, and
(d) subsequently thermally bonding with the pair of upper and lower flat rolls at a temperature lower by 5 to 60°C than the melting point of the low-melting polymer.

9. The production method for a spunbonded nonwoven fabric according to claim 8, wherein the spinneret of the step (a) is a spinneret having a round discharge orifice.

10. The production method for a spunbonded nonwoven fabric according to claim 8, wherein the spinneret of the step (a) is a spinneret having a discharge orifice having an aspect ratio (long side length/short side length) of 1.6 to 8.

11. The production method for a spunbonded nonwoven fabric according to any one of claims 8 to 10, wherein the movable amorphous content of the spunbonded nonwoven fabric obtained in the step (c) is 40 to 55%, wherein the movable amorphous content of the spunbonded nonwoven fabric is measured according to the method disclosed in the description.

12. The production method for a spunbonded nonwoven fabric according to any one of claims 8 to 11, wherein the movable amorphous content of the spunbonded nonwoven fabric obtained in the step (d) is 35 to 50%, wherein the movable amorphous content of the spunbonded nonwoven fabric is measured according to the method disclosed in the description.

13. The production method for a spunbonded nonwoven fabric according to any one of claims 8 to 12, wherein the conjugate fiber of the step (a) is a polyester fiber.

**Patentansprüche**

1. Spinnvliesstoff, der thermoplastische Fasern umfasst, wobei die thermoplastische Faser eine konjugierte Faser ist, in der ein niedrigschmelzendes Polymer mit einem 10 bis 140 °C niedrigeren Schmelzpunkt als der eines hochschmelzenden Polymers um das hochschmelzende Polymer herum bereitgestellt ist, die scheinbare Einzelfaserfeinheit der konjugierten Faser von der Oberfläche des Spinnvliesstoffes gesehen 0,5 dtex oder mehr und 10 dtex oder weniger beträgt, wenn die scheinbare Einzelfaserfeinheit der konjugierten Faser 0,5 dtex oder mehr und weniger als 2 dtex beträgt, die Schüttdichte 0,50 bis 0,70 g/cm$^3$ ist, die Luftdurchlässigkeit die nachstehende [Formel 1] erfüllt, und wenn die scheinbare Einzelfaserfeinheit der konjugierten Faser 2 dtex oder mehr und 10 dtex oder weniger beträgt, die Schüttdichte 0,50 bis 0,80 g/cm$^3$ ist, und die Luftdurchlässigkeit die nachstehende [Formel 2] erfüllt,

$$. \ 3.8 \times 10^4 \times [\text{Grundgewicht (g/m}^2\text{)}]^{-2} \leq [\text{Luftdurchlässigkeit (cc/cm}^2\text{•s)}] \leq 6.0 \times 10^4 \times [\text{Grundgewicht (g/m}^2\text{)}]^{-2}$$

und

$$. \ 2.2 \times 10^4 \times [\text{Grundgewicht (g/m}^2\text{)}]^{-2} \leq [\text{Luftdurchlässigkeit (cc/cm}^2\text{•s)}] \leq 4.6 \times 10^4 \times [\text{basis weight (g/m}^2\text{)}]^{-2}$$

wobei die scheinbare Einzelfaserfeinheit der konjugierten Faser, die Schüttdichte des Spinnvliesstoffes und die Luftdurchlässigkeit des Spinnvliesstoffes gemäß den in der Beschreibung offenbarten Verfahren gemessen werden und

wobei der Spinnvliesstoff durch ein Herstellungsverfahren hergestellt wird, das die folgenden Schritte (a) bis (d) nacheinander in dieser Reihenfolge umfasst:

(a) Spinnen, mittels einer Spinndüse, einer konjugierten Faser, in der ein niedrigschmelzendes Polymer mit einem 10 bis 140 °C niedrigeren Schmelzpunkt als ein hochschmelzendes Polymer um das hochschmelzende Polymer herum bereitgestellt ist;

(b) Verstrecken der gesponnenen konjugierten Fasern mittels eines Saugstroms unter Verwendung eines Hochgeschwindigkeitssauggases und Sammeln der Fasern auf einem sich bewegenden Netzförderer, um die gesammelten Fasern zu einem Vliesnetz zu formen;

(c) Thermobonden des erhaltenen Vliesnetzes mit einem Paar aus einer oberen und einer unteren Flachbahnwalze bei einer Temperatur 65 bis 95 °C unter dem Schmelzpunkt des niedrigschmelzenden Polymers und

(d) anschließendes Thermobonden mit dem Paar aus einer oberen und einer unteren Flachbahnwalze bei einer Temperatur 5 bis 60 °C unter dem Schmelzpunkt des niedrigschmelzenden Polymers.

2. Spinnvliesstoff nach Anspruch 1, wobei die scheinbare Einzelfaserfeinheit der konjugierten Faser von der Oberfläche des Spinnvliesstoffes gesehen 0,5 dtex oder mehr und weniger als 2 dtex beträgt und eine Bekk-Glätte zumindest einer Oberfläche des Spinnvliesstoffes 1 bis 10 Sekunden beträgt,
wobei die Bekk-Glätte gemäß dem in der Beschreibung offenbarten Verfahren gemessen wird.

3. Spinnvliesstoff nach Anspruch 1, wobei die scheinbare Einzelfaserfeinheit der konjugierten Faser von der Oberfläche des Spinnvliesstoffes gesehen 2 dtex oder mehr und 10 dtex oder weniger beträgt und die Bekk-Glätte zumindest einer Oberfläche des Spinnvliesstoffes 3 bis 20 Sekunden beträgt,
wobei die Bekk-Glätte gemäß dem in der Beschreibung offenbarten Verfahren gemessen wird.

4. Spinnvliesstoff nach einem der Ansprüche 1 bis 3, wobei das Grundgewicht des Spinnvliesstoffes 10 bis 150 g/m$^2$ beträgt.

5. Spinnvliesstoff nach einem der Ansprüche 1 bis 4, wobei die thermoplastische Faser eine Polyesterfaser ist.

6. Spinnvliesstoff nach einem der Ansprüche 1 bis 5, wobei die thermoplastische Faser einen beweglichen amorphen Anteil von 35 bis 50 % aufweist,
wobei der bewegliche amorphe Anteil gemäß dem in der Beschreibung offenbarten Verfahren gemessen wird.

7. Trennmembranträger, der einen Spinnvliesstoff nach einem der Ansprüche 1 bis 6 umfasst.

8. Herstellungsverfahren für einen Spinnvliesstoff nach Anspruch 1, wobei das Verfahren die folgenden Schritte (a) bis (d) nacheinander in dieser Reihenfolge umfasst:

(a) Spinnen, mittels einer Spinndüse, einer konjugierten Faser, in der ein niedrigschmelzendes Polymer mit einem 10 bis 140 °C niedrigeren Schmelzpunkt als ein hochschmelzendes Polymer um das hochschmelzende Polymer herum bereitgestellt ist;

(b) Verstrecken der gesponnenen konjugierten Fasern mittels eines Saugstroms unter Verwendung eines Hochgeschwindigkeitssauggases und Sammeln der Fasern auf einem sich bewegenden Netzförderer, um die gesammelten Fasern zu einem Vliesnetz zu formen;

(c) Thermobonden des erhaltenen Vliesnetzes mit einem Paar aus einer oberen und einer unteren Flachbahnwalze bei einer Temperatur 65 bis 95 °C unter dem Schmelzpunkt des niedrigschmelzenden Polymers und

(d) anschließendes Thermobonden mit dem Paar aus einer oberen und einer unteren Flachbahnwalze bei einer Temperatur 5 bis 60 °C unter dem Schmelzpunkt des niedrigschmelzenden Polymers.

**9.** Herstellungsverfahren für einen Spinnvliesstoff nach Anspruch 8, wobei die Spinndüse aus Schritt (a) eine Spinndüse mit einer runden Ausgabeöffnung ist.

**10.** Herstellungsverfahren für einen Spinnvliesstoff nach Anspruch 8, wobei die Spinndüse aus Schritt (a) eine Spinndüse mit einer Ausgabeöffnung mit einem Aspektverhältnis (Länge der langen Seite/Länge der kurzen Seite) von 1,6 bis 8 ist.

**11.** Herstellungsverfahren für einen Spinnvliesstoff nach einem der Ansprüche 8 bis 10, wobei der bewegliche amorphe Anteil des in Schritt (c) erhaltenen Spinnvliesstoffes 40 bis 55 % beträgt, wobei der bewegliche amorphe Anteil des Spinnvliesstoffes gemäß dem in der Beschreibung offenbarten Verfahren gemessen wird.

**12.** Herstellungsverfahren für einen Spinnvliesstoff nach einem der Ansprüche 8 bis 11, wobei der bewegliche amorphe Anteil des in Schritt (d) erhaltenen Spinnvliesstoffes 35 bis 50 % beträgt, wobei der bewegliche amorphe Anteil des Spinnvliesstoffes gemäß dem in der Beschreibung offenbarten Verfahren gemessen wird.

**13.** Herstellungsverfahren für einen Spinnvliesstoff nach einem der Ansprüche 8 bis 12, wobei die konjugierte Faser aus Schritt (a) eine Polyesterfaser ist.

## Revendications

**1.** Tissu non tissé filé-lié comprenant des fibres thermoplastiques, dans lequel la fibre thermoplastique est une fibre conjuguée dans laquelle un polymère à bas point de fusion présentant un point de fusion inférieur de 10 à 140°C à celui d'un polymère à haut point de fusion est prévu autour du polymère à haut point de fusion, une finesse apparente de fibre unique de la fibre conjuguée vue depuis la surface du tissu non tissé filé-lié est de 0,5 dtex ou plus et de 10 dtex ou moins, lorsque la finesse apparente de fibre unique de la fibre conjuguée est de 0,5 dtex ou plus et de moins de 2 dtex, une densité apparente est de 0,50 à 0,70 g/cm$^3$, et la perméabilité à l'air satisfait à la [formule 1] décrite ci-dessous, et lorsque la finesse apparente de fibre unique de la fibre conjuguée est de 2 dtex ou plus et de 10 dtex ou moins, la densité apparente est de 0,50 à 0,80 g/cm$^3$, et la perméabilité à l'air satisfait à la [formule 2] décrite ci-dessous,

. $3.8 \times 10^4 \times$ [poids de base (g/m$^2$)]$^{-2} \leq$ [perméabilité à l'air (cc/cm$^2$·s)] $\leq 6.0 \times 10^4 \times$ [Grundgewicht (g/m$^2$))$^{-2}$

, et

. $2.2 \times 10^4 \times$ [poids de base (g/m$^2$)]$^{-2} \leq$ [perméabilité à l'air (cc/cm$^2$·s)] $\leq 4.6 \times 10^4 \times$ [basis weight (g/m$^2$))$^{-2}$

,

dans lequel la finesse apparente de fibre unique de la fibre conjuguée, la densité apparente du tissu non-tissé filé-lié et la perméabilité à l'air du tissu non-tissé filé-lié sont mesurées selon les procédés divulgués dans la description, et

dans lequel le tissu non-tissé filé-lié est produit par un procédé de production comprenant les étapes (a) à (d) suivantes séquentiellement dans cet ordre :

(a) filer, à partir d'une filière, une fibre conjuguée dans laquelle un polymère à bas point de fusion présentant un point de fusion inférieur de 10 à 140°C à celui d'un polymère à haut point de fusion est prévu autour du polymère à haut point de fusion,

(b) étirer les fibres conjuguées filées par flux d'aspiration à l'aide d'un gaz d'aspiration à grande vitesse et collecter les fibres sur un convoyeur à filet mobile pour former les fibres collectées en une bande non tissée,

(c) lier thermiquement le voile non tissé obtenu à l'aide d'une paire de rouleaux plats supérieur et inférieur à une température inférieure de 65 à 95°C au point de fusion du polymère à bas point de fusion, et

(d) ensuite lier thermiquement avec la paire de rouleaux plats supérieur et inférieur à une température inférieure de 5 à 60°C au point de fusion du polymère à bas point de fusion.

2. Tissu non-tissé filé-lié selon la revendication 1, dans lequel la finesse apparente de fibre unique de la fibre conjuguée, vue depuis la surface du tissu non-tissé filé-lié, est de 0,5 dtex ou plus et de moins de 2 dtex, et un lissé Bekk d'au moins une surface du tissu non-tissé filé-lié est de 1 à 10 secondes,

dans lequel le lissé BEKK est mesuré selon le procédé divulgué dans la description.

3. Tissu non-tissé filé-lié selon la revendication 1, dans lequel la finesse apparente de fibre unique de la fibre conjuguée vue depuis la surface du tissu non-tissé filé-lié est de 2 dtex ou plus et de 10 dtex ou moins, et un lissé Bekk d'au moins une surface du tissu non-tissé filé-lié est de 3 à 20 secondes,

dans lequel le lissé BEKK est mesuré selon le procédé divulgué dans la description.

4. Tissu non-tissé filé-lié selon l'une quelconque des revendications 1 à 3, dans lequel le poids de base du tissu non-tissé filé-lié est de 10 à 150 g/m$^2$.

5. Tissu non-tissé filé-lié selon l'une quelconque des revendications 1 à 4, dans lequel la fibre thermoplastique est une fibre polyester.

6. Tissu non-tissé filé-lié selon l'une quelconque des revendications 1 à 5, dans lequel la fibre thermoplastique présente une teneur amorphe mobile de 35 à 50 %,

dans lequel la teneur amorphe mobile est mesurée selon le procédé divulgué dans la description.

7. Support de membrane de séparation comprenant le tissu non-tissé filé-lié selon l'une quelconque des revendications 1 à 6.

8. Procédé de production d'un tissu non-tissé filé-lié selon la revendication 1, le procédé de production comprenant les étapes (a) à (d) suivantes séquentiellement dans cet ordre :

(a) filer, à partir d'une filière, une fibre conjuguée dans laquelle un polymère à bas point de fusion présentant un point de fusion inférieur de 10 à 140°C à celui d'un polymère à haut point de fusion est prévu autour du polymère à haut point de fusion,

(b) étirer les fibres conjuguées filées par flux d'aspiration à l'aide d'un gaz d'aspiration à grande vitesse et collecter les fibres sur un convoyeur à filet mobile pour former les fibres collectées en une bande non tissée,

(c) lier thermiquement le voile non tissé obtenu à l'aide d'une paire de rouleaux plats supérieur et inférieur à une température inférieure de 65 à 95°C au point de fusion du polymère à bas point de fusion, et

(d) ensuite lier thermiquement avec la paire de rouleaux plats supérieur et inférieur à une température inférieure de 5 à 60°C au point de fusion du polymère à bas point de fusion.

9. Procédé de production d'un tissu non-tissé filé-lié selon la revendication 8, dans lequel la filière de l'étape (a) est une filière présentant un orifice de décharge rond.

10. Procédé de production d'un tissu non-tissé filé-lié selon la revendication 8, dans lequel la filière de l'étape (a) est une filière présentant un orifice de décharge ayant un rapport d'aspect (longueur de côté long/longueur de côté court) de 1,6 à 8.

11. Procédé de production d'un tissu non-tissé filé-lié selon l'une quelconque des revendications 8 à 10, dans lequel la teneur amorphe mobile du tissu non-tissé filé-lié obtenu à l'étape (c) est de 40 à 55 %,

dans lequel la teneur amorphe mobile du tissu non-tissé filé-lié est mesurée selon le procédé divulgué dans la description.

12. Procédé de production d'un tissu non-tissé filé-lié selon l'une quelconque des revendications 8 à 11, dans lequel la teneur amorphe mobile du tissu non-tissé filé-lié obtenu à l'étape (d) est de 35 à 50 %,

dans lequel la teneur amorphe mobile du tissu non-tissé filé-lié est mesurée selon le procédé divulgué dans la description.

13. Procédé de production d'un tissu non-tissé filé-lié selon l'une quelconque des revendications 8 à 12, dans lequel la fibre conjuguée de l'étape (a) est une fibre de polyester.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009017086 A
- EP 2174703 A1
- JP 2016029221 A
- JP 2007284859 A

- EP 2818229 A1
- EP 3051014 A1
- EP 3395426 A1